(19) **Europäisches Patentamt / European Patent Office / Office européen des brevets**

(11) **EP 1 350 044 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **01985921.4**

(22) Anmeldetag: **21.12.2001**

(51) Int Cl.:
***F16H 61/04*** *(2006.01)*     ***F16H 59/72*** *(2006.01)*

(86) Internationale Anmeldenummer:
**PCT/EP2001/015183**

(87) Internationale Veröffentlichungsnummer:
**WO 2002/055903 (18.07.2002 Gazette 2002/29)**

(54) **Kraftfahrzeug mit einem mehrfach-Kupplungseinrichtung aufweisenden Antriebsstrang**

Motor vehicle comprising a drive train having a multiple clutch device

Véhicule à chaîne cinématique présentant un dispositif à embrayage multidisques

(84) Benannte Vertragsstaaten:
**AT BE CH CY DE DK ES FI FR GB GR IE IT LI LU MC NL PT SE TR**

(30) Priorität: **12.01.2001 DE 10101176**
**01.10.2001 DE 10148424**

(43) Veröffentlichungstag der Anmeldung:
**08.10.2003 Patentblatt 2003/41**

(60) Teilanmeldung:
**05005212.5 / 1 550 820**
**05005213.3 / 1 544 512**
**05005214.1 / 1 544 513**

(73) Patentinhaber:
• **ZF Sachs AG**
**97424 Schweinfurt (DE)**
• **Volkswagen AG**
**38436 Wolfsburg (DE)**

(72) Erfinder:
• **KUHSTREBE, Jochen**
**97318 Westheim (DE)**
• **MOSELER, Olaf**
**97070 Würzburg (DE)**
• **ROHM, Axel**
**97453 Schonungen (DE)**
• **STEINER, Eduard**
**97228 Rottendorf (DE)**
• **REUTHAL, Rainer**
**97294 Unterpleichfeld (DE)**
• **SCHNEIDER, Hans-Jürgen**
**97440 Werneck-Stettbach (DE)**
• **KUNDERMANN, Wolfgang**
**97422 Schweinfurt (DE)**
• **SUDAU, Jörg**
**97464 Niederwerrn (DE)**
• **JOHN, Thomas**
**97529 Sulzheim (DE)**
• **STRASSER, Thomas**
**97422 Schweinfurt (DE)**

(56) Entgegenhaltungen:
EP-A- 0 301 724     EP-A- 0 976 955
DE-A- 3 037 990     DE-A- 4 136 583
DE-A- 10 060 699     DE-A- 19 530 233
DE-A- 19 729 354     DE-A- 19 850 549
DE-A- 19 937 455     DE-C- 19 944 179
FR-A- 2 790 297     US-A- 2 630 893
US-A- 4 301 904     US-A- 4 576 063
US-A- 4 603 596     US-A- 4 660 441
US-A- 5 125 282     US-A- 5 159 855
US-A- 5 181 431     US-A- 5 319 963
US-A- 5 407 401     US-A- 5 503 039
US-A- 5 643 136     US-A- 5 803 863
US-A- 5 890 392     US-A- 5 893 816
US-A- 6 145 398

• PATENT ABSTRACTS OF JAPAN vol. 015, no. 279 (M-1136), 16. Juli 1991 (1991-07-16) -& JP 03 096760 A (NISSAN MOTOR CO LTD), 22. April 1991 (1991-04-22)
• PATENT ABSTRACTS OF JAPAN vol. 014, no. 110 (M-0943), 28. Februar 1990 (1990-02-28) -& JP 01 312254 A (HINO MOTORS LTD), 18. Dezember 1989 (1989-12-18)
• PATENT ABSTRACTS OF JAPAN vol. 1997, no. 09, 30. September 1997 (1997-09-30) & JP 09 133207 A (JATCO CORP), 20. Mai 1997 (1997-05-20)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**(Forts. nächste Seite)**

- **PATENT ABSTRACTS OF JAPAN vol. 1995, no. 08, 29. September 1995 (1995-09-29) -& JP 07 139620 A (TOYOTA AUTOM LOOM WORKS LTD), 30. Mai 1995 (1995-05-30)**
- **PATENT ABSTRACTS OF JAPAN vol. 006, no. 184 (M-157), 21. September 1982 (1982-09-21) & JP 57 091376 A (SUZUKI MOTOR CO LTD), 7. Juni 1982 (1982-06-07)**
- **PATENT ABSTRACTS OF JAPAN vol. 007, no. 187 (M-236), 16. August 1983 (1983-08-16) & JP 58 088250 A (HONDA GIKEN KOGYO KK), 26. Mai 1983 (1983-05-26)**
- **PATENT ABSTRACTS OF JAPAN vol. 1995, no. 04, 31. Mai 1995 (1995-05-31) & JP 07 019337 A (DAIHATSU MOTOR CO LTD), 20. Januar 1995 (1995-01-20)**
- **PATENT ABSTRACTS OF JAPAN vol. 1996, no. 02, 29. Februar 1996 (1996-02-29) -& JP 07 259895 A (NISSAN DIESEL MOTOR CO LTD), 9. Oktober 1995 (1995-10-09)**

## Beschreibung

### [Technisches Gebiet]

Die Erfindung betrifft ein Kraftfahrzeug umfassend eine sogenannte Mehrfach-Kupplungseinrichtung, ggf. Doppel-Kupplungseinrichtung, für die Anordnung in einem Kraftfahrzeug-Antriebsstrang zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung zur Momentübertragung zwischen der Antriebseinheit und dem Getriebe aufweist, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit (insbesondere für einen nasslaufenden Betrieb) zuführbar ist. Es wird in diesem Zusammenhang insbesondere (aber nicht ausschließlich) an eine solche Kupplungseinrichtung gedacht, bei der die Lamellen-Kupplungsanordnungen auf hydraulischem Wege vermittels in die Kupplungseinrichtung integrierten hydraulischen Nehmerzylindern betätigbar sind.

### [Stand der Technik]

Derartige Kupplungseinrichtungen wurden in verschiedenen Patentanmeldungen der Anmelderin vorgeschlagen.

Die Erfindung betrifft ferner ein Kraftfahrzeug umfassend einen Antriebsstrang, der eine Antriebseinheit und ein Getriebe (ggf. Lastschaltgetriebe) mit einer ersten Getriebeeingangswelle und einer zweiten Getriebeeingangswelle sowie eine Kupplungseinrichtung der genannten Art aufweist, sowie ein einen derartigen Antriebsstrang umfassendes Kraftfahrzeug. Es wird in diesem Zusammenhang insbesondere daran gedacht, dass dem vorzugsweise als Lastschaltgetriebe ausgeführten Getriebe eine Aktuator-Anordnung und eine die Aktuator-Anordnung ansteuernde Steuereinrichtung zugeordnet ist, unter deren Vermittelung der ersten und der zweiten Getriebeeingangswelle zugeordnete Getriebegänge ein- und auslegbar sind.

Um einen Verschleiß bzw. ein Verbrennen der Lamellen (insbesondere Belaglamellen) zu verhindern, ist die Schmierung/Kühlung der Lamellen durch eine Betriebsflüssigkeit (insbesondere Kühlöl) erforderlich. Regelmäßig für derartige Anwendungen eingesetzte Öle weisen bei Betriebstemperatur (ca. 90°C) eine niedrige Zähigkeit (niedrige Viskosität) auf, so dass bei geöffneten Kupplungsanordnungen (druckloser hydraulischer Betätigungszylinder im Falle einer hydraulisch betätigbaren Kupplungsanordnung des NORMALERWEISE-OFFEN-Typs) die Schleppmomente, die durch das zwischen den Lamellen befindliche Öl hervorgerufen werden, vergleichsweise gering sind (beispielsweise kleiner als 2 Nm). Ist jedoch die Öltemperatur sehr niedrig (etwa deutlich kleiner als 0°C), wie dies beispielsweise infolge eines nächtlichen Abstellens des Kraftfahrzeugs im Winter auftreten kann, resultiert eine drastisch erhöhte Zähigkeit (Viskosität) des Öls, und es können dann sehr hohe Schleppmomente auftreten (bis zu Werten größer als 25 Nm). Zusätzlich zu den Schleppmomenten können Losbrech- oder Loslösmomente von bis zu über 50 Nm aufgrund von aneinander anhaftenden (aneinander klebenden) Lamellen auftreten, die zu Beginn des Fahrbetriebs aber nur einmal aufzubringen wären, um die aneinander anhaftenden (aneinander klebenden) Lamellen voneinander zu lösen. Nach diesem Lösen der Lamellen treten dann aber immer noch die Schleppmomente auf, bis die Zähigkeit (Viskosität) des Öls durch die Erwärmung des Motors und das Einbringen von Wärme (Reibenergie) in die Kupplungsanordnungen sinkt.

Als Folge dieser hohen Schlepp- bzw. Aneinanderhaftmomente kann das Einlegen eines Ganges praktisch unmöglich werden, da die Synchronisierungseinrichtungen des Getriebes in der Regel nicht für die Überwindung derartig hoher Momente ausgelegt sind. Typisch sind die Synchronisierungseinrichtungen für Momente in der Größenordnung 5 Nm ausgelegt. Können keine Gänge eingelegt bzw. kann nicht geschaltet werden, so ist ein Fahrbetrieb mit dem Fahrzeug nicht möglich.

Die Gattungsgemäße US 5 181 431 offenbart ein Kraftfahrzeug nach dem Oberbegriff des Anspruchs 1 bzw. ein Verfahren zum Betrieb eines solchen Fahrzeugs.

### [Darstellung der Erfindung]

Auch die vorliegende Erfindung zielt darauf, die vorstehend angesprochenen Probleme zu lösen oder zumindest zu mildern, insbesondere besser beherrschbar zu machen. Dieses wird durch ein Kraftfahrzeug gemäß Anspruch 1 und durch ein Verfahren zum Betrieb eines solchen Kraftfahrzeugs gemäß Anspruch 11 erreicht.

Nach der Erfindung wird vorgeschlagen ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind. Erfindungsgemäß ist vorgesehen, dass die Steuereinrichtung dafür ausgelegt ist, beim Abstellen des Fahrzeugs in Reaktion darauf vermittels der Aktuator-Anordnung wenigstens einen Getriebegang automatisch einzulegen.

Diesem Vorschlag liegt unter anderem die Überlegung zugrunde, bereits beim Abstellen des noch betriebsamen Fahrzeugs wenigstens einen Gang oder bestimmte Gänge einzulegen, beispielsweise insgesamt zwei Gänge, nämlich einen für die eine Getriebeeingangswelle und einen für die andere Getriebeeingangswelle.

Es gibt im Prinzip verschiedene Möglichkeiten, wie die Steuereinrichtung das Abstellen bzw. ein bevorstehendes Abstellen des Kraftfahrzeugs erkennen kann. Ist eine manuell bedienbare Wähleinrichtung zum Wählen verschiedener Fahrzeugs- oder/und Getriebemodi vorgesehen, so kann vorgesehen sein, dass die Steuereinrichtung in Reaktion auf ein Wählen eines Parkmodus (P) den wenigstens einen Getriebegang einlegt. Erfindungsgemäß ist die Steuereinrichtung dafür ausgelegt, beim Abstellen des Fahrzeugs vermittels der Aktuator-Anordnung wenigstens einen Getriebegang dann automatisch einzulegen, wenn eine Positiv-Bedingung erfüllt ist. Erfindungsgemäß wird vorgesehen, dass die Steuereinrichtung dafür ausgelegt ist, beim Abstellen des Fahrzeugs in Reaktion darauf vermittels der Aktuator-Anordnung wenigstens einen Getriebegang automatisch dann einzulegen, wenn eine momentane Außentemperatur unter einem Schwellenwert liegt. Erfindungsgemäß ist ferner auch vorgesehen, dass in bestimmten Situationen beim Abstellen des Fahrzeugs kein Gang eingelegt wird, beispielsweise wenn der Fahrer ein entsprechendes "Negativ-Kommando" gibt.

Es wurde im Prinzip schon angesprochen, dass die Steuereinrichtung vorteilhaft dafür ausgelegt sein kann, beim Abstellen des Fahrzeugs in Reaktion darauf vermittels der Aktuator-Anordnung wenigstens einen der ersten Getriebeeingangswelle zugeordneten Getriebegang und wenigstens einen der zweiten Getriebeeingangswelle zugeordneten Getriebegang automatisch einzulegen. In diesem Zusammenhang wird insbesondere daran gedacht, dass zu den einzulegenden bzw. eingelegten Gängen ein niedriger oder mittlerer Vorwärtsgang und der Rückwärtsgang gehört. In der Regel wird es ausreichend sein, wenn die Steuereinrichtung dafür ausgelegt ist, beim Abstellen des Fahrzeugs in Reaktion darauf vermittels der Aktuator-Anordnung genau einen der ersten Getriebeeingangswelle zugeordneten Getriebegang und genau einen der zweiten Getriebeeingangswelle zugeordneten Getriebegang automatisch einzulegen. Von den eingelegten Gängen ist der eine vorzugsweise der niedrige oder mittlere Vorwärtsgang und ist der andere vorzugsweise der Rückwärtsgang.

Als besonders bevorzugt wird vorgeschlagen, dass als niedriger oder mittlerer Vorwärtsgang der erste oder zweite Gang eingelegt wird. Die beim Abstellen eingelegten Gänge sollen es nämlich ermöglichen, dass das Fahrzeug sowohl vorwärts als auch rückwärts bewegt werden kann, um gegebenenfalls rückwärts oder/und vorwärts eine Parklücke oder einen sonstigen Abstellplatz verlassen zu können. Es erscheint deshalb sinnvoll, entweder die Gänge (1 und R) oder (2 und R) einzulegen. Die Wahl zwischen 1 und 2 hängt von der Konstruktion des Getriebes ab. Sind z.B. die Gänge R-1-3-5 einer Getriebeeingangswelle zugeordnet und die Gänge 2-4-6 der anderen Getriebeeingangswelle zugeordnet, so ist das gleichzeitige Einlegen des Gangs 1 und des Rückwärtsgangs R nicht möglich. Es ist aber durchaus denkbar, dass z.B. der 1. oder der 2. Gang jeweils auf beiden Getriebeeingangswellen vorliegen. In diesem Fall könnte eine freie Wahl zwischen (1 und R) und (2 und R) getroffen werden. Generell empfiehlt es sich, einen größeren Vorwärtsgang einem kleineren Vorwärtsgang vorzuziehen. Da aufgrund der niedrigen Temperatur der Betriebsflüssigkeit unter Umständen in den ersten Minuten nach dem Start des Fahrzeugs nicht geschaltet werden kann, bietet ein größerer Vorwärtsgang dem Fahrer die Möglichkeit, höhere Geschwindigkeiten zu erreichen, als dies beispielsweise im ersten Vorwärtsgang möglich wäre. Somit sind grundsätzlich auch die Kombinationen (3 und R), (4 und R) usw. denkbar. Allerdings kann ein hoher Gang dann Probleme verursachen, wenn man mit Last beispielsweise am Berg anfahren will. Hier bietet sich wiederum eher ein niedrigerer Vorwärtsgang an. Besonders vorteilhaft erscheint somit die Wahl (2 und R) zu sein. Diese Kombination bietet einen Kompromiss zwischen der maximal erreichbaren Fahrgeschwindigkeit und einem hinreichend großen Anfahrmoment bezogen auf die Antriebsräder.

Man mag sich fragen, welchen Sinn es haben könnte, mehrere einer Getriebeeingangswelle zugeordnete Gänge einzulegen. Diese Maßnahme bietet aber die Möglichkeit, dass beim Starten des Kraftfahrzeugs zwischen mehreren der betreffenden Getriebeeingangswelle zugeordneten Gängen ein für das Anfahren in der betreffenden Situation besonders geeigneter Gang ausgewählt werden kann. Die anderen Gänge würden dann ausgelegt werden. Eine andere "Einsatzmöglichkeit" dieser Maßnahme ergibt sich daraus, dass das Getriebe durch zwei eingelegte, der gleichen Getriebeeingangswelle zugeordnete Gänge blockiert. Es wird vorgeschlagen, diesen Effekt zur Bereitstellung einer "Parksperre" das Fahrzeug auszunutzen. Die Steuereinrichtung kann also dafür ausgelegt sein, beim Abstellen des Fahrzeugs in Reaktion darauf vermittels der Aktuator-Anordnung wenigstens zwei der gleichen Getriebeeingangswelle zugeordnete Getriebegänge automatisch einzulegen, derart, dass das Getriebe blockiert und damit für das Fahrzeug als Parksperre wirkt.

Die Steuereinrichtung kann vorteilhaft dafür ausgelegt sein, den wenigstens einen beim Abstellen des Fahrzeugs vermittels der Aktuator-Anordnung eingelegten Getriebegang beim Eintreten einer Auslege-Bedingung automatisch wieder auszulegen. Ist eine manuell bedienbare Wähleinrichtung zum Wählen verschiedener Fahrzeug- oder/und Getriebemodi vorgesehen, so kann es zweckmäßig sein, wenn die Steuereinrichtung in Reaktion auf ein Wählen eines Neutralmodus (N) den wenigstens einen Getriebegang auslegt. Dem Vorschlag liegen Sicherheitsüberlegungen zugrunde, um Fehlbedienungen und Beschädigung des Getriebes zu vermeiden. Es kann vorgesehen sein, dass bei Bewegen eines Schaltelements (etwa Schalthebels) nach N die eingelegten Gänge ausgelegt werden, dass aber etwa bei einem Schalten etwa zwischen D und R über N der eingelegte Vorwärtsgang und der eingelegte Rückwärtsgang nicht ausgelegt werden, so dass zwischen einem Fahren in Vorwärtsrichtung und einem Fahren in Rückwärtsrichtung geschaltet werden kann. Das Auslegen der Gänge würde also nur aus einer Verstellung des Schaltelements in den Zustand N resultieren. Es kann aber durchaus auch vorgesehen sein, dass auch schon ein Schalten über den Neutralmodus, etwa zwischen den Modi D und R, zu einem Auslegen der Gänge führt, und dass anschließend das Fahrzeug im Normalbetrieb fortbewegt wird bzw. werden muss.

Weiterbildend bzw. Verallgemeinernd wird vorgeschlagen, dass die Steuereinrichtung dafür ausgelegt ist, den wenigstens einen Getriebegang nur dann auszulegen, wenn wenigstens eine Positiv-Bedingung erfüllt oder/und wenigstens eine Negativ-Bedingung nicht erfüllt ist. Beispielsweise kann in einem Neutralmodus unter bestimmten Voraussetzungen (etwa Öltemperatur unter einem Schwellenwert oder/und Außentemperatur unter einem Schwellenwert) der wenigstens eine Gang eingelegt bleiben, da eventuell bei einem späteren Einlegversuch Getriebegänge auf Grund zu hoher Schleppmomente nicht mehr bzw. noch nicht einlegbar sind. Man sollte auch an die Möglichkeit denken, dass das Kraftfahrzeug in gewissen Situationen abgeschleppt werden muss. Die Steuereinrichtung kann dafür ausgebildet sein, einen Abschleppmodus zu erkennen. Ein solcher könnte auch manuell wählbar sein. Liegt ein solcher Abschleppmodus vor, so sollten trotz der eigentlich das Nicht-Auslegen indizierenden Voraussetzungen im Neutralmodus die Gänge bzw, der Gang ausgelegt werden.

In den vorstehenden Ausführungen wurde implizit schon angesprochen, dass die Steuereinrichtung vorteilhaft dafür ausgelegt sein kann, von mehreren beim Abstellen des Fahrzeugs vermittels der Aktuator-Anordnung eingelegten Getriebegängen zum Vorbereiten eines Anfahren des Kraftfahrzeugs alle Gänge bis auf wenigstens einen zum Anfahren geeigneten, ggf. durch einen Fahrer mittels einer manuell bedienbare Wähleinrichtung ausgewählten automatisch wieder auszulegen, wobei für jede Getriebeeingangswelle höchstens ein zugeordneter Gang eingelegt bleibt. Vorzugsweise bleiben der niedrige oder mittlere Vorwärtsgang und der Rückwärtsgang eingelegt.

Nach einem anderen Beispiel eines Kraftfahrzeugs wird ein Kraftfahrzeug vorgeschlagen, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, und wobei das Kraftfahrzeug, insbesondere dessen Antriebsstrang, mit einer Parksperre ausgeführt ist.

Erfindungsgemäß ist vorgesehen, dass die Parksperre auf dem Einlegen von wenigstens zwei der gleichen Getriebeeingangswelle zugeordneten Getriebegängen beruht.

Ferner wird allgemein ein Kraftfahrzeug bereitgestellt, umfassend einen Antriebsstrang, der aufweist: eine Antriebseinheit, ein Getriebe mit einer Getriebeeingangswelle und eine Kupplungseinrichtung mit einer Kupplungsanordnung, die der Getriebeeingangswelle zugeordnet ist, zur Momentenübertragung zwischen der Antriebseinheit und dem Getriebe, wobei dem Getriebe eine Aktuator-Anordnung und eine die Aktuator-Anordnung ansteuernde Steuereinrichtung zugeordnet ist, unter deren Vermittlung der Getriebeeingangswelle zugeordnete Getriebegänge ein- und auslegbar sind, und wobei das Kraftfahrzeug, insbesondere dessen Antriebsstrang, mit einer Parksperre ausgeführt ist.

Nach einem anderen Beispiels eines Kraftfahrzeugs ist vorgesehen, dass die Parksperre auf dem Einlegen von wenigstens zwei der Getriebeeingangswelle zugeordneten Getriebegängen beruht.

Es wird wieder auf die eingangs angesprochenen Probleme Bezug genommen. Es wird in der Regel nicht völlig auszuschließen sein, dass ein erfindungsgemäßes Kraftfahrzeug in einem Zustand abgestellt wird, in dem kein Gang eingelegt ist. Ferner könnte es sein, dass nur ein Gang eingelegt ist, beispielsweise ein Vorwärtsgang, dass nun aber ein Rückwärtsgang zum Anfahren benötigt wird. Nach einem anderen wird Beispiel eines Kraftfahrzeugs hierzu im Hinblick auf die Beherrschung der oben angesprochenen Probleme vorgeschlagen ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind.

Es ist nach diesem Beispiel vorgesehen, dass die Aktuator-Anordnung dafür ausgelegt ist, Schaltelemente des Getriebes in einen Vorspannzustand zu bringen, in dem die Schaltelemente in Richtung eines Einlegen eines zugeordneten Getriebeganges mechanisch vorgespannt sind, und dass die Steuereinrichtung dafür ausgelegt ist, die Aktuator-Anordnung bei nicht laufender Antriebseinheit derart anzusteuern, dass wenigstens ein momentan nicht eingelegter Gang eingelegt wird oder wenigstens ein diesem Gang zugeordnetes Schaltelement in den Vorspannzustand gebracht wird.

Geht man davon aus, dass kein oder nur ein Gang eingelegt ist, und nun ein Anfahrgang oder wenigstens ein anderer Gang eingelegt werden soll, so werden nach diesem Erfindungsvorschlag beispielsweise die Schaltgabeln der Gänge (z.B. Rückwärtsgang und 2. Gang) bzw. des Gangs durch die Aktuatorik (Aktuator-Anordnung) betätigt. Ein Einlegen des Gangs bzw. der Gänge ist jedoch nur dann möglich, wenn beispielsweise die Schaltverzahnung des Kupplungskörpers des jeweiligen Gangrads auf die Zahnzwischenräume des zugehörigen Gegenrads der Schaltmuffe der Synchroneinrichtung trifft (es wird hier von einer Synchroneinrichtung typischer Konstruktion des Stands der Technik als Beispiel ausgegangen). Falls sich die Zahnflanken treffen, kann der Gang bzw. können die Gänge nicht eingelegt werden. In diesem Fall werden im Beispielsfall die Schaltgabeln durch die Aktuatorik erfindungsgemäß mechanisch vorgespannt.

Wird nun etwa ein Anlasser bei geöffneten Kupplungen betätigt, werden die kupplungs- bzw. antriebseinheitsseitigen (motorseitigen) Zahnräder bewegt, weil der Antriebsstrang aufgrund des Losbrech-Schleppmoments (entsprechende Temperaturen des Betriebsmediums vorausgesetzt) trotz geöffneter Kupplung nicht vollständig vom Motor getrennt ist. Die Zahnräder auf der Getriebeabtriebsseite stehen hingegen, da eine Parksperre noch eingelegt ist und/oder das Fahrzeug bei entriegelter Parksperre steht. Durch die Relativbewegung wird schließlich jeweils eine Position erreicht, bei der die Zähne der motorseitigen Zahnräder auf die Zahnzwischenräume der abtriebsseitigen Zahnräder treffen. Durch die Vorspannung kann dann der Gang einrutschen.

Es kann vorteilhaft vorgesehen sein, dass die Steuereinrichtung dafür ausgelegt ist, eine direkt oder indirekt auf wenigstens eine der Getriebeeingangswellen oder/und eine Abtriebswelle der Antriebseinheit oder/und eine Getriebeausgangswelle wirkende Elektromaschine derart anzusteuern oder zu betätigen, dass wenigstens eine der Wellen drehangetrieben wird. Hierdurch kann unter Ausnutzung des Vorspannzustands der betreffende Gang eingelegt werden, wie vorstehend anhand eines konkreten Beispiels schon näher erläutert wurde.

Der betreffende Gang kann gezielt besonders zuverlässig dann eingelegt werden, wenn die Steuereinrichtung dafür ausgelegt ist, unter Vermittlung der Elektromaschine die Welle definiert in eine Drehstellung zu drehen, in der in Folge eines Mitdrehens wenigstens eines Gangeinlegeelements des Getriebes ein Einlegen des Ganges überhaupt erst möglich oder zumindest erleichtert ist. Die Elektromaschine kann als Kurbelwellenstartergenerator oder Anlasser, der der als Brennkraftmaschine ausgeführten Antriebseinheit zugeordnet ist oder als Elektro-Antriebseinheit ausgeführt sein.

Steht ein kontinuierlich ansteuerbarer Anlasser, wie z.B. ein Kurbelwellenstartergenerator oder ein Elektrohybridantrieb, zur Verfügung, so kann über einen derartigen Elektroantrieb beispielsweise die Kurbelwelle so positioniert werden, dass wenigstens ein Gang eingelegt werden kann. Durch Weiterdrehen der Kurbelwelle können auch noch mehr Gänge eingelegt werden.

Um auch bei tiefen Außentemperaturen zuverlässig die Antriebseinheit starten zu können oder/und ein Weiterdrehen der Welle zu ermöglichen, sollte ein/der Anlasser (der der als Brennkraftmaschine ausgeführten Antriebseinheit zugeordnet ist) bzw. die Elektromaschine zumindest kurzzeitig ein Drehmoment erzeugen können, das ausreicht, Losbrechmomente und Schleppmomente der Kupplungsanordnungen aufgrund erhöhter Viskosität der Betriebsflüssigkeit bei tiefen Temperaturen sowie Gegenmomente der Antriebseinheit zu überwinden, um die Antriebseinheit starten zu können oder/und ein Weiterdrehen der Welle zu ermöglichen. Betreffend das Starten der Antriebseinheit bezieht sich dieser Weiterbildungsvorschlag auch auf die Erfindungsvorschläge (Abstellen des Fahrzeugs mit wenigstens einem eingelegten Gang). Die Steuereinrichtung kann vorteilhaft dafür ausgelegt sein, durch Einwirkung auf die Antriebseinheit während einer Drehbeschleunigungsphase die Gegenmomente der Antriebseinheit zu reduzieren.

Nach den hier angesprochenen Weiterbildungsvorschlägen wird also empfohlen, den angesprochenen "Elektroantrieb" so stark auszulegen, dass das Losbrechmoment und die Schleppmomente beider Kupplungsanordnungen und - im Falle eines Verbrennungsmotors - die Kompression und Reibung des die Antriebseinheit bildenden Motors überwunden werden können. Verfügt der Verbrennungsmotor über eine Einrichtung zur Verringerung oder Aufhebung der Kompression (beispielsweise durch variable Nocken- oder Nockenwellenverstellung, Dekompressionsventile oder elektrisch betätigte Anoder/und Auslassventile), so sollten diese genutzt werden, um während der Beschleunigungsphase der Kurbelwelle kurzzeitig den Elektroantrieb zu entlasten. Die erforderlichen Anlassmomente können so verringert werden.

Nach einem weiteren Beispiel wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, vorgeschlagen, dass die Aktuator-Anordnung dafür ausgelegt ist, Schaltelemente des Getriebes oder/und diesen zugeordnete oder zugehörige Synchronelemente mit gegenüber normalen Betätigungskräften überhöhten Betätigungskräften zu beaufschlagen, und dass die Steuereinrichtung dafür ausgelegt ist, die überhöhten Betätigungskräfte bedarfsweise einzustellen und zeitlich zu begrenzen.

Es wird beispielsweise daran gedacht, dass die Getriebeaktuatorik den Gang bzw. die Gänge mit einer kurzzeitig sehr hohen Kraft (z.B. 2000 N) einlegt, wobei diese Kraft größer als jene Kraft ist, die über eine längere Zeit an der Synchroneinrichtung (beispielsweise an den Synchronringen) anstehen kann (z.B. 500 N).

Nach dem Erfindungsvorschlag ist vorgesehen, dass eine an sich "normale" Synchronisierung durch die Synchronelemente erfolgt, dass diese aber kurzzeitig gewissermaßen in einem "Überlastbetrieb" betrieben werden. Das Einlegen eines Gangs kann dann bei laufender Antriebseinheit erfolgen. Steht das Fahrzeug noch, so empfiehlt es sich, eine entsprechende Betätigung des Getriebes mittels der Aktuator-Anordnung nur dann zuzulassen, wenn eine Fußbremse o. dgl. betätigt ist oder/und eine Parksperre eingelegt ist, damit verhindert wird, dass das Fahrzeug aufgrund der Schlepp- und Losbrechmomente an der betreffenden Kupplungsanordnung plötzlich beschleunigt wird. Allgemein kann die Steuereinrichtung dafür ausgelegt sein, die überhöhten Betätigungskräfte dann einzustellen, wenn wenigstens eine Positiv-Bedingung erfüllt oder/und wenigstens eine Negativ-Bedingung nicht erfüllt ist.

Nach einem weiteren Beispiel wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, wobei das Getriebe den Getriebegängen zugeordnete Schaltelemente und diesen zugeordnete oder zugehörige Synchronelemente aufweist, wobei zum Einlegen eines Gangs (im Folgenden als Zielgang bezeichnet) wenigstens ein dem Zielgang zugeordnetes Synchronelement vermittels der Aktuator-Anordnung aktivierbar ist, wenigstens eine dem Zielgang zugeordnete Getriebewelle, insbesondere die dem Zielgang zugeordnete Getriebeeingangswelle, zu synchronisieren, vorgeschlagen, dass zum Einlegen des Zielgangs zusätzlich wenigstens ein wenigstens einem anderen Gang zugeordnetes Synchronelement vermittels der Aktuator-Anordnung aktivierbar ist, die dem Zielgang zugeordnete Getriebewelle zu synchronisieren.

Gleichzeitig hierzu kann die Aktuator-Anordnung beispielsweise mehrere unabhängig voneinander betätigbare Aktuatoren aufweisen. Dem Erfindungsvorschlag liegt die Überlegung zugrunde, die im Hinblick auf das Losbrechmoment oder/und die Schleppmomente nötigen (gegenüber einem Normalbetrieb erhöhten) Synchronkräfte mit mehreren Synchroneinheiten oder Elementen aufzubringen. Dabei können einem Aktuator beispielsweise ein oder mehrere Schaltgabeln zugeordnet sein. Will man z.B. den 1. Gang einlegen, so können zum Abbremsen bzw. Beschleunigen der Getriebeeingangswelle sämtliche auf dieser Welle angeordnete Synchroneinheiten genutzt werden, sofern sie gleichzeitig betätigt werden können. Im Falle eines Lastschaltgetriebes könnten also beispielsweise die Synchronisiereinheiten des 1., 3. und 5. Ganges zum Abbremsen der diesen Gängen zugeordneten Getriebeeingangswelle verwendet werden. Es sollte jedoch sichergestellt werden, dass bei einer sich verlangsamenden Getriebeeingangswelle (allgemein: bei einer sich einem Synchronpunkt nähernden Getriebeeingangswelle) nicht plötzlich zwei oder mehr Gänge eingelegt werden. Hierzu wird vorgeschlagen, dass eine entsprechende Sicherheitsfunktionalität vorgesehen ist, die ein unbeabsichtigtes Einlegen des anderen Ganges verhindert. Die Sicherheitsfunktionalität sorgt beispielsweise dafür, dass die Synchronisiereinheiten/Schaltmuffen des 3. und 5. Ganges nur einen begrenzten Weg zurücklegen, der es zwar ermöglicht, die Getriebeeingangswelle abzubremsen, aber nicht den betreffenden Gang einzulegen.

Vorteilhaft in diesem Zusammenhang kann insbesondere die Überwachung der Drehzahl der Wellen sein. Anhand der Fahrzeuggeschwindigkeit, die beispielsweise aus einem Getriebeausgangsdrehzahlsensor oder aus den Raddrehzahlen (mit einer gewissen Unsicherheit aufgrund von Antriebsstrangschwingungen und Auflösungsvermögen der Raddrehzahlsensoren bei niedriger Fahrzeuggeschwindigkeit) bestimmt werden kann und der mit einem Drehzahlsensor gemessenen Drehzahl der Getriebeeingangswelle, die abgebremst bzw. beschleunigt werden soll, könnte die Annäherung an einen Synchronpunkt erkannt werden, so dass dann die Aktuatorik des "anderen Gangs" (der zwar zum Abbremsen der Welle verwendet wird, aber nicht eingelegt werden soll) so angesteuert wird, dass diese kurz vor dem Synchronpunkt die Betätigungskraft reduziert, so dass ein Einlegen dieses Ganges verhindert wird. Allgemeiner wird vorgeschlagen, dass die Steuereinrichtung dafür ausgelegt ist, auf Grundlage von erfassten Drehzahlen eine Annäherung an einen dem anderen Gang zugeordneten Synchronpunkt zu erkennen und vor Erreichen des Synchronpunktes auf wenigstens ein dem anderen Gang zugeordnetes Schaltelement oder/und Synchronelement wirkende Aktivierungskräfte aufzuheben oder zu reduzieren, um ein Einlegen des anderen Gangs zu verhindern.

Häufig wird es vorteilhaft sein, wenn die Steuereinrichtung dafür ausgelegt ist, dass die Steuereinrichtung dafür ausgelegt ist, vermittels der Aktuator-Anordnung das wenigstens eine dem wenigstens einen anderen Gang zugeordnete Synchronelement bedarfsweise dann zu aktivieren, wenn wenigstens eine Positiv-Bedingung erfüllt oder/und wenigstens eine Negativ-Bedingung nicht erfüllt ist. Insbesondere kann vorgesehen sein, dass bei normalen Temperaturen bzw. normaler Viskosität der Betriebsflüssigkeit kein wenigstens einem anderen Gang zugeordnetes Synchronelement aktiviert wird.

Für bei den vorstehend angesprochenen, sich auf die Beherrschung der eingangs angesprochenen Probleme beziehenden Aspekte erscheint es aus Sicherheitsgründen vorteilhaft, wenn ein Starten der Antriebseinheit in Abhängigkeit von einer Betätigung und Nicht-Betätigung eines Fahrzeug-Bremssystems oder/und von dem Bedienzustand einer manuell bedienbaren Wähleinrichtung zum Wählen verschiedener Fahrzeug- oder/und Getriebemodi oder/und von einem momentan geltenden Fahrzeug- oder/und Getriebemodus sperrbar und freigebbar ist.

Demgemäß wird nach einem weiteren Beispiel ein Kraftfahrzeug bereitgestellt, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind.

Es ist vorgesehen, dass ein Starten der Antriebseinheit in Abhängigkeit von einer Betätigung und Nicht-Betätigung eines Fahrzeug-Bremssystems oder/und von dem Bedienzustand einer manuell bedienbaren Wähleinrichtung zum Wählen verschiedener Fahrzeug- oder/und Getriebemodi oder/und von einem momentan geltenden Fahrzeug- oder/und Getriebemodus sperrbar und freigebbar ist.

Diesem Erfindungsvorschlag liegt eine Betrachtung des Startvorgangs bzw. Anlassvorgangs zugrunde. Ist mindestens ein Gang bei noch nicht laufender Antriebseinheit eingelegt, und wird dann die Antriebseinheit in Betrieb gesetzt, so könnte es bei niedrigen Temperaturen aufgrund der Schlepp- bzw. Losbrechmomente zu einer plötzlichen, vom Fahrer nicht kontrollierten und möglicherweise nicht mehr beherrschbaren Beschleunigung des Fahrzeugs kommen. Dies wird verhindert, wenn dafür Sorge getragen wird, dass der Fahrer beim Start der Antriebseinheit (insbesondere beim Anlassen des Motors) beispielsweise die Fußbremse betätigt oder/und eines mittels einem Fahrprogrammwählhebel o. dgl. einen Parkmodus P einstellt. Betreffend die Parksperre wirkt dann gegen diese das Schleppmoment übersetzt mit dem Übersetzungsverhältnis des eingelegten Gangs. Die Parksperre muss dementsprechend robust ausgelegt sein. Eine vorteilhafte, oben angesprochene Ausgestaltung der Parksperre besteht darin, zwei oder mehr Gänge auf einer Getriebeeingangswelle einzulegen. Zum Auslegen der Parksperre genügt es dann, die eingelegten Gänge pro Getriebeeingangswelle auf einen Gang zu reduzieren. Ferner, dies wurde bereits angesprochen, muss der Anlasser dafür ausgelegt sein, dass er nicht nur das Schleppmoment überwindet, sondern auch noch den Motor hoch beschleunigen kann.

Man kann vorsehen, dass ein Start der Antriebseinheit dann ohne Einschränkungen möglich ist, wenn momentan kein Gang eingelegt ist, beispielsweise weil mittels eines Fahrprogrammwählhebels o. dgl. eine Position N (Neutralmodus) gewählt ist. Ein Einlegen wenigstens eines Gangs auch bei tiefen Temperaturen ist dann trotz der tiefen Temperaturen bei entsprechender Auslegung des Kraftfahrzeugs möglich.

Ebenfalls im Hinblick auf eine hohe Sicherheit gegen unkontrollierte Beschleunigungsvorgänge wird für alle sich auf die eingangs angesprochene Problematik beziehenden Aspekte weiter vorgeschlagen, dass ein Wechsel von einem momentanen Fahrzeug- oder/und Getriebemodus zu einem anderen Fahrzeug- oder/und Getriebemodus durch entsprechende Bedienung einer manuell bedienbaren Wähleinrichtung zum Wählen verschiedener Fahrzeug- oder/und Getriebemodi in Abhängigkeit von einer Betätigung und Nicht-Betätigung des Fahrzeug-Bremssystems sperrbar und freigebbar ist oder/und dass der Wechsel zum anderen Fahrzeug- oder/und Getriebemodus durch entsprechende Bedienung der Wähleinrichtung mit einer Betätigung des Fahrzeug-Bremssystems zwangsgekoppelt oder zwangskoppelbar ist.

Ein weiteres Beispiel schlägt ein Kraftfahrzeugs, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, vor, dass ein Wechsel von einem momentanen Fahrzeug- oder/und Getriebemodus zu einem anderen Fahrzeug- oder/und Getriebemodus durch entsprechende Bedienung einer manuell bedienbaren Wähleinrichtung zum Wählen verschiedener Fahrzeugoder/und Getriebemodi in Abhängigkeit von einer Betätigung und Nicht-Betätigung des Fahrzeug-Bremssystems sperrbar und freigebbar ist oder/und dass der Wechsel zum anderen Fahrzeug- oder/und Getriebemodus durch entsprechende Bedienung der Wähleinrichtung mit einer Betätigung des Fahrzeug-Bremssystems zwangsgekoppelt oder zwangskoppelbar ist.

Beispielsweise kann vorgesehen sein, dass ein Schalten von P oder N nach D oder R nur dann erlaubt wird, falls das durch den Fahrer aufgebrachte Bremsmoment ausreichend groß ist, um eine Bewegung des Fahrzeugs aufgrund der Schleppmomente in den Kupplungsanordnungen zu verhindern. Ferner ist es vorstellbar, dass beispielsweise ein Bremssystem automatisch beim Übergang eines Bedienelements von N oder P nach D oder R ohne Zutun des Fahrers die Bremsen schließt, so dass insoweit ebenfalls keine unkontrollierte Beschleunigung des Fahrzeugs auftreten kann.

Man kann vorsehen, dass die Sperrung oder/und die Zwangskoppelung dann wirksam wird, wenn wenigstens eine Positiv-Bedingung erfüllt oder/und wenigstens eine Negativ-Bedingung nicht erfüllt ist.

Soweit es um die Sperrung oder Freigabe geht, kommt es darauf an, ob das vom Bremssystem aufgebrachte Bremsmoment überhaupt ausreicht, das Fahrzeug trotz der Schleppmomente an Ort und Stelle zu halten (ggf. könnte eine kontrollierte Kriechbewegung zugelassen werden). Verfügt man über ein Fahrzeug mit einer elektrohydraulischen Bremse (EHB) oder einer elektromechanischen Bremse (EMB) oder mit einer konventionellen Bremsanlage mit Bremsassistent, so wird herkömmlich der Pedalweg entweder direkt über den Weg oder den Winkel des Bremspedals oder indirekt über die Position der Membran des Bremskraftverstärkers oder des Kolbens im Hauptbremszylinder gemessen, so dass insoweit eine Information über das Bremsmoment an den Rädern zur Verfügung steht. Bei Fahrzeugen mit elektronischem Stabilitätsprogramm (ESP) wird sogar der Bremsdruck mindestens in beiden Bremskreisen (ggf. auch im Hauptbremszylinder) gemessen, so dass hier eine sehr genaue Information über das Bremsmoment vorhanden ist. Diese Information sollte im Zusammenhang mit den auf die Betätigung bzw. Nichtbetätigung eines Fahrzeug-Bremssystems abstellenden Erfindungsvorschlägen ausgenutzt und beispielsweise durch eine entsprechende Steuerung verarbeitet werden. Allgemein wird vorgeschlagen, dass eine/die Steuereinrichtung ein an den Fahrzeugrädern wirksames Bremsmoment erfasst, bestimmt oder abschätzt, und auf Grundlage dieses Bremsmoments sowie gegebenenfalls auf Grundlage eines erfassten, bestimmten oder vorgegebenen Kupplungs-Schleppmoments oder/und Kupplungs-Lamellenhaftmoments die Sperrung oder Freigabe bewirkt.

Betreffend die angesprochene Zwangskopplung wird vorgeschlagen, dass eine/die Steuereinrichtung ein an den Fahrzeugrädern wirksames Bremsmoment einstellt, und zwar vorzugsweise auf der Grundlage eines erfassten, bestimmten oder vorgegebenen Kupplungs-Schleppmoments oder/und Kupplungs-Lamellenhaftmoments. Es wird hierdurch gewährleistet, dass das eingestellte Bremsmoment ausreicht, das Fahrzeug kontrolliert an Ort und Stelle zu halten.

Die Steuereinrichtung, die die Sperrung oder Freigabe bewirkt bzw. das Bremsmoment einstellt, kann vorteilhaft dafür ausgelegt sein, auf der Grundlage des Kupplungs-Schleppmoments oder/und Kupplungs-Lamellenhaftmoments eine Fahrzeug-Kriechfunktion bereitzustellen. Beim Lösen der Bremse bzw. Schalten nach D oder R soll nach diesem Vorschlag ein Kriechmoment auf die angetriebenen Räder wirken. In der Regel macht es aber nur Sinn, eine derartige Kriechfunktion nur dann bereitzustellen, wenn auch unter normalen Bedingungen, also im normalen Fahrbetrieb, eine Kriechfunktion durch eine entsprechende Funktionalität bereitgestellt wird.

Nach einem weiteren Beispiel wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, vorgeschlagen, dass eine/die Steuereinrichtung dafür ausgelegt ist, vermittels eines Fahrzeug-Bremssystems ein an den Fahrzeugrädern wirksames Bremsmoment derart einzustellen, dass bei laufender Antriebseinheit und an sich ausgerückten Kupplungsanordnungen auf die Fahrzeugräder wirkende Kupplungs-Schleppmomente oder/und Kupplungs-Lamellenhaftmomente zu Null oder einem Sollwert kompensiert werden, oder/und vorgeschlagen, dass eine/die Steuereinrichtung dafür ausgelegt ist, vermittels der Kupplungseinrichtung ein bei laufender Antriebseinheit an den Fahrzeugrädern wirksames Antriebsmoment, welches im Zustand ausgerückter Kupplungsanordnungen im wesentlichen auf Kupplungs-Schleppmomenten oder/und Kupplungs-Lamellenhaftmomenten beruht, dadurch zu Null oder einem Sollwert zu kompensieren, dass von den beiden Kupplungsanordnungen im Zustand eines eingelegten Vorwärtsgangs, der der einen Kupplungsanordnung zugeordnet ist, und eines eingelegten Rückwärtsgangs, der der anderen Kupplungsanordnung zugeordnet ist, wenigstens eine gezielt im Einrücksinne betätigt wird, um das von dieser Kupplungsanordnung übertragene Moment um einen Kompensationswert zu erhöhen.

Diesen Vorschläge, die sich vor allem auf das Anfahren bzw. die Situation unmittelbar vor dem Anfahren beziehen, liegt die Überlegung zugrunde, dass nicht auszuschließen ist, dass trotz einer Betätigung etwa einer Fußbremse durch den Fahrer die erzielte Bremswirkung nur sehr gering oder zumindest so gering ist, um eine unbeabsichtigte Beschleunigung bzw. Bewegung des Fahrzeugs zu verhindern. Beispielsweise könnte es sein, dass am Bremspedal nur ein oder zwei Bremsschalter vorgesehen sind, die keine Angaben über den Pedalweg oder die Bremskraft machen, sondern nur anzeigen, dass das Pedal aus der Ruhestellung bewegt ist. Es könnte dann die Situation auftreten, dass das Bremsmoment kleiner ist als das auf den Antrieb wirkende Schleppmoment. In diesem Falle würde sich das Fahrzeug nach dem Lösen der Feststellbremse oder Parksperre bewegen. Dieses Bewegen sollte verhindert werden, damit der Fahrer stets vollständige Kontrolle über das Fahrzeug hat und damit gefährliche Situationen vermieden werden können. Im Falle, dass eine Kriechfunktionalität vorgesehen ist, d.h. ein leichtes Antreiben des Fahrzeugs nach Einlegen des Fahrgangs (Schalthebel auf D oder R) vorgesehen oder einstellbar ist, sollte das das Fahrzeug antreibende Kriechmoment ein steuerungstechnisch von der Kriechfunktionalität vorgegebenes Kriechmoment nicht übersteigen. Hieraus wird deutlich, dass es sich empfiehlt, dass das Moment, das an den Fahrzeugrädern wirkt, einstellbar ist. Eine korrekte Berücksichtigung des Bremsmoments wird dann besonders einfach, wenn das Fahrzeug mit einem Bremssystem neuerer Technologie, wie oben angesprochen, ausgerüstet ist. Die von diesem Bremssystem bereitstellbaren Informationen über die genaue Pedalstellung oder/und den Bremsdruck können vorteilhaft genutzt werden, um die Erfindungsvorschläge zu realisieren, wie oben schon angesprochen.

So kann durch gezielten Eingriff etwa in das Bremsmanagement die Bremswirkung der Radbremsen so erhöht werden, dass die gewünschte Fahrzeugbeschleunigung (im Falle einer Kriechfunktionalität, nämlich gleich der vorgesehenen Kriechbeschleunigung) oder keine Fahrzeugbeschleunigung (bzw. Fahrzeugbeschleunigung 0, falls keine Kriechfunktionalität vorhanden ist bzw. diese nicht aktiviert ist) erreicht wird. Falls eine Fahrzeug-Berghaltefunktion (Hillholder-Funktionalität) vorhanden ist, ist es zweckmäßig, die auf das Fahrzeug einwirkende Hangabtriebskraft zu berücksichtigen und dementsprechend die resultierende Fahrzeugbeschleunigung auf 0 bzw. auf dem Kriechwert zu halten. Es könnte die Möglichkeit vorgesehen sein, dass die Bremswirkung durch das System ohne Fahrereinwirkung beeinflussbar ist, etwa bei einem konventionellen hydraulischen System mit ABS/ESP, einer elektrohydraulischen Bremse (EHB) oder einer elektromechanischen Bremse (EMB).

Vorteilhafter als der (verschleißbehaftete) Bremseingriff, der zudem nicht unbedingt bei allen Fahrzeugen möglich oder nicht gewünscht ist, etwa weil hierdurch der Antriebsstrang verspannt wird (wodurch z.B. Schwingungen beim Eingriff und Lösen der Bremsen auftreten könnten), ist das gezielte Aufbringen von Momenten, insbesondere Kompensationsmomenten, direkt in der Kupplungseinrichtung. Hierauf zielt der zweite Vorschlag. Ist ein Vorwärtsgang und der Rückwärtsgang eingelegt, so können durch gezielte Ansteuerung der beiden Kupplungsanordnungen die übertragenen Momente gegeneinander arbeiten und so das Moment, das an der Getriebeabtriebswelle erscheint, auf 0 oder ein gewünschtes Moment (Kriechmoment) reduzieren.

$$M_{abtrieb} = M_{vorwärts} - M_{rückwärts} = M_{kriech}$$

$$oder$$

$$M_{abtrieb} = M_{vorwärts} - M_{rückwärts} = 0.$$

Entscheidend sind dabei nicht die von den Kupplungen übertragenen Momente, sondern die am Getriebeabtrieb wirkenden Momente, die sich aus den an den beiden Getriebeeingangswellen wirkenden Momenten und die Übersetzungen des eingelegten Vorwärtsgangs und des eingelegten Rückwärtsgangs ergeben. Diese von der Getriebeeingangsseite zur Getriebeabtriebsseite transformierten Momente können als "effektive Momente" bezeichnet werden und sind, wie erwähnt, abhängig vom eingelegten Gang. Ein kleinerer Gang bewirkt an der Getriebeabtriebswelle ein höheres effektives Moment als ein größerer Gang. Entsprechend muss die Kupplung, deren effektives Abtriebsmoment kleiner ist, soweit geschlossen werden, dass das Abtriebsmoment den gewünschten Wert annimmt, also die gewünschte Kompensation erreicht wird.

Im Zusammenhang mit dem zweiten Vorschlag, nach dem die beiden Kupplungsanordnungen gewissermaßen gegeneinander arbeiten, empfiehlt es sich, dass die Steuereinrichtung dafür ausgelegt ist, die Kupplungsanordnung nur soweit im Einrücksinne zu betätigen, dass eine an der Kupplungsanordnung auftretende Verlustleistung aufgrund von Reibung einen Maximalwert nicht übersteigt. Bei sehr zähflüssiger Betriebsflüssigkeit (sehr zähflüssigem Öl) kann es sein, dass die Betriebsflüssigkeit fördernde Pumpenanordnung (Kühlölpumpe) unter Umständen nicht genügend Betriebsflüssigkeit fördert. Wird eine Verdrängerpumpe eingesetzt, so ist insbesondere das Ansaugen bei zähflüssiger Betriebsflüssigkeit problematisch. Wird eine Drallförderpumpe eingesetzt, so ist sowohl das Ansaugen als auch das Fördern bei sehr zähflüssiger Betriebsflüssigkeit problematisch. Steht infolge der Zähflüssigkeit nicht genügend Betriebsflüssigkeit zur Verfügung, wird also nicht genügend Betriebsflüssigkeit den Kupplungsanordnungen zugeführt, so kann es bei stark verlustleistungsbehafteten Anfahrten zu einer Schädigung der Belag tragenden Lamellen kommen. Die maximal von der Steuereinrichtung zugelassene Verlustleistung sollte sich also an der maximal möglichen Betriebsflüssigkeitsfördermenge orientieren. Dies gilt grundsätzlich auch im sonstigen Fahrbetrieb.

In diesem Zusammenhang wird allgemein vorgeschlagen, dass die Steuereinrichtung dafür ausgelegt ist, einen momentanen Versorgungsstatus der Kupplungsanordnung betreffend die Versorgung mit Betriebsflüssigkeit zu bestimmten oder abzuschätzen, und aus dem Versorgungsstatus den momentan anzuwendenden Maximalwert zu bestimmen.

Wie schon in den vorangehenden Erläuterungen angesprochen, kann die Steuereinrichtung vorteilhaft dafür ausgelegt sein, auf der Grundlage des momentan wirksamen Kupplungs-Schleppmoments oder/und Kupplungs-Lamellenhaftmoments eine Fahrzeug-Kriechfunktion oder/und - durch Berücksichtigung einer auf das Fahrzeug wirkenden Hangabtriebskraft bei der Kompensation - eine Fahrzeug-Berghaltefunktion bereitzustellen.

Es wurden bereits die Vorteile angesprochen, die sich daraus ergeben, gleichzeitig einen Vorwärts- und den Rückwärtsgang einzulegen. Es kann dann das Fahrzeug in beide Richtungen bewegt werden, ohne dass noch Gänge ein- und ausgelegt werden müssen.

Nach einem weiteren Beispiel wird in diesem Zusammenhang ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, bereitgestellt, das sich dadurch auszeichnet, dass ein der einen Getriebeeingangswelle zugeordneter Vorwärtsgang und eine der anderen Getriebeeingangswelle zugeordneter Rückwärtsgang gleichzeitig einlegbar sind, und dass das Fahrzeug im Zustand, dass diese Gänge gleichzeitig eingelegt sind, fahrbar ist, wobei zum Fahren in Vorwärtsrichtung die der einen Getriebeeingangswelle zugeordnete Kupplungsanordnung ausgehend von einem ausgerückten Zustand im Einrücksinne betätigbar ist und zum Fahren in Rückwärtsrichtung die der anderen Getriebeeingangswelle zugeordnete Kupplungsanordnung ausgehend von einem ausgerückten Zustand im Einrücksinne betätigbar ist.

Weiterbildend wird vorgeschlagen, dass zum Wechsel der Fahrrichtung von der Vorwärtsrichtung zur Rückwärtsrichtung die der einen Getriebeeingangswelle zugeordnete Kupplungsanordnung im Ausrücksinne und die der anderen Getriebeeingangswelle zugeordnete Kupplungsanordnung im Einrücksinne bzw. von der Rückwärtsrichtung zur Vorwärtsrichtung die der anderen Getriebeeingangswelle zugeordnete Kupplungsanordnung im Ausrücksinne und die der einen Getriebeeingangswelle zugeordnete Kupplungsanordnung im Einrücksinne betätigbar ist.

Fährt man mit einem solchen Fahrzeug beispielsweise vorwärts im 2. Gang, so können durchaus Geschwindigkeiten bis über 100 Km/h erreicht werden. Durch die hohe Übersetzung des Rückwärtsgangs können auf der zugeordneten Kupplungsanordnung dabei sehr hohe, negative Drehzahlen auftreten, die ggf. zu einer Zerstörung der Kupplungsanordnung bzw. zur Schädigung der Reibbeläge führen können. Ferner könnte ein Fehler bei der Kupplungsbetätigung zu einer Zerstörung des Getriebes führen. Vor diesem Hintergrund wird weiterbildend vorgeschlagen, dass eine Geschwindigkeits-Begrenzungsfunktionalität vorgesehen ist, die beim Fahren mit gleichzeitig eingelegtem Vorwärts- und Rückwärtsgang die Fahrzeuggeschwindigkeit auf einen Maximalwert begrenzt. Beispielsweise könnte eine Geschwindigkeitsgrenze von 20 km/h vorgesehen sein. Durch eine solche Begrenzung der Fahrzeuggeschwindigkeit werden die angesprochenen Probleme zuverlässig vermieden.

Eine andere Möglichkeit zur Vermeidung der angesprochenen Probleme liegt darin, dass ab einer bestimmten Fahrzeuggeschwindigkeit (in Vorwärtsrichtung) der Rückwärtsgang automatisch ausgelegt wird.

Es wird hierzu speziell vorgeschlagen, dass eine Gangauslege-Funktionalität vorgesehen ist, die beim Fahren mit gleichzeitig eingelegtem Vorwärts- und Rückwärtsgang in Vorwärtsrichtung den Rückwärtsgang dann auslegt, wenn die Fahrzeuggeschwindigkeit einen Schwellenwert übersteigt. Diesem Weiterbildungsvorschlag liegt die Überlegung zugrunde, dass in der Regel die Schleppmomente nach kurzer Betriebsdauer soweit reduziert sein werden, dass ein normales Schalten wieder möglich ist, so dass beispielsweise in den nächsten Vorwärtsgang oder wieder in den Rückwärtsgang geschaltet werden kann. Es sei aber ausdrücklich darauf hingewiesen, dass bei sehr kaltem, d.h. sehr zähem Kühlöl ein Einlegen eines neuen Gangs bzw. das erneute Einlegen des Rückwärtsgangs auf einer sich im Leerlauf befindlichen Getriebeeingangswelle unter Umständen nicht möglich sein wird.

Betreffend die Geschwindigkeits-Begrenzungsfunktionalität sei noch darauf hingewiesen, dass keine Begrenzung der Fahrzeuggeschwindigkeit erforderlich ist, wenn der Rückwärtsgang (schon) ausgelegt ist.

Geht man von heutigen Schaltelementen bzw. Konfigurationen des Schalthebels aus, so erfolgt die Umschaltung zwischen Rückwärts (R) und Vorwärts (D) über die Neutralstellung (N), so dass es beim Umschalten auf jeden Fall zu einem Auslegen des Vorwärts- bzw. Rückwärtsgangs kommen wird. Und dies wird unter Umständen nicht erwünscht sein, um auch bei tiefen Temperaturen das Fahrzeug sowohl in Vorwärts- als auch in Rückwärtsrichtung rangieren zu können. Wie bereits angesprochen, könnte man daran denken, dass allein durch ein Schalten über die Position N noch keine Ausleganweisung gegeben wird, sondern nur dann, wenn das Schaltelement tatsächlich in die Position N gebracht wird und dort eine Mindestzeit verbleibt. Bei zukünftigen Schaltelementen könnte man sich auch eine völlig andere Anordnung vorstellen. Es liegt auf jeden Fall im Rahmen des Beispiels, wenn ermöglicht ist, dass mit einem eingelegten Rückwärtsgang vorwärts gefahren werden kann bzw. mit einem eingelegten Vorwärtsgang rückwärts gefahren werden kann bzw. abwechselnd der Vorwärtsgang und der Rückwärtsgang "aktivierbar" ist, das Fahrzeug entsprechend anzutreiben.

Ein wichtiger Aspekt ist auch das Schalten der Gänge nach dem Losfahren. Da ein Fahrzeug in der Regel nur sehr selten bei sehr niedrigen Temperaturen bewegt werden wird, ist es durchaus eine vernünftige Lösung, wenn man bei tiefen Temperaturen größere Synchronkräfte zulässt als normalerweise erlaubt sind. Hierdurch kann erreicht werden, dass die Betriebsflüssigkeitstemperatur, ab der geschaltet werden kann, niedriger angesetzt werden kann, so dass bereits zu einem früheren Zeitpunkt nach dem Start des Motors das Schalten erlaubt werden kann. Die Möglichkeit der Zulassung größerer Synchronkräfte als normal wurde oben bereits angesprochen. Ferner wurde oben auch die Möglichkeit angesprochen, dass mehrere Synchronisiereinrichtungen dazu benutzt werden, die betreffende Getriebeeingangswelle zu synchronisieren. Dieser Vorschlag ist nicht nur beim Gangeinlegen zum Anfahren, sondern auch beim Gangwechsel während des Fahrbetriebs anwendbar. Beim Schalten beispielsweise vom 2. in den 3. Gang können beispielsweise die Synchronisiereinrichtungen des 3. und des 5. Gangs dazu genutzt werden, die betreffende Getriebeeingangswelle abzubremsen, wenn man davon ausgeht, dass sich beide Getriebeeingangswellen aufgrund der hohen Schleppmomente mit Motordrehzahl drehen. Dabei sollten vorzugsweise Maßnahmen getroffen werden, um das Einlegen eines falschen Gangs zuverlässig zu verhindern.

Als weitere Möglichkeit wird für ein Kraftfahrzeug, umfassend einen Antriebsstrang, der aufweist: eine Antriebseinheit, ein Lastschaltgetriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung ansteuert, um die Kupplungsanordnungen im Einrück- und Ausrücksinne zu betätigen, wobei die Steuereinrichtung dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen vermittels der Betätigungseinrichtung gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren, vorgeschlagen, dass ein Aktiv-Synchronisierungsmodus vorgesehen ist, in dem zur De-aktivierung des Ausgangsgangs als momentenübertra-gender Gang und Aktivierung des Zielgang als momentenübertragender Gangs zuerst der Ausgangsgang ausgelegt wird oder/und die dem Ausgangsgang zugeordnete Kupplungsanordnung geöffnet wird, dann die Drehzahl der Antriebseinheit oder/und die Drehzahl der dem Zielgang zugeordneten Getriebeeingangswelle auf das Synchronverhältnis des Zielgangs gebracht wird und dann der Zielgang eingelegt wird.

Man kann in diesem Zusammenhang vorsehen, dass im Aktiv-Synchronisierungsmodus die Drehzahl der Antriebseinheit und die Drehzahl der dem Zielgang zugeordneten Getriebeeingangswelle dadurch gemeinsam auf das Synchronverhältnis des Zielgangs gebracht werden, dass beim Bringen der Drehzahl der Antriebseinheit auf das Synchronverhältnis die dem Zielgang zugeordnete Kupplungsanordnung zumindest teilweise eingerückt ist. Eine andere Möglichkeit ist, dass das im Aktiv-Synchronisierungsmodus nach Bringen der Drehzahl der Antriebseinheit auf das Synchronverhältnis die Drehzahl der dem Zielgang zugeordneten Getriebeeingangswelle auf das Synchronverhältnis durch zumindest teilweises Einrücken der dem Zielgang zugeordnete Kupplungsanordnung gebracht wird.

Die vorstehenden Vorschläge ermöglichen ein Schalten der Gänge bei Tieftemperaturen unter größtmöglicher Schonung bzw. Entlastung der Synchronisiereinrichtungen durch aktive Synchronisierung vermittels der Kupplungseinrichtung. Man kann vom "Prinzip des aktiven Synchronisierens" sprechen. Durch das erfindungsgemäße aktive Synchronisieren ist im Falle eines Lastschaltgetriebes zwar kein zugkraftunterbrechungsfreies Schalten mehr gegeben, dies wird aber in der Regel in der Aufwärmphase der Betriebsflüssigkeit (des Kühlöls) akzeptiert werden.

Nach dem Beispiel wird beim Schalten von einem Gang (dem Ausgangsgang) zum anderen Gang (dem Zielgang) zuerst der Ausgangsgang ausgelegt, so dass im Antriebsstrang kein Formschluss mehr gegeben ist. Grundsätzlich ist es auch denkbar, den Ausgangsgang eingelegt zu lassen und nur die dem Ausgangsgang zugeordnete Kupplungsanordnung zu öffnen. Danach wird dann die Drehzahl der Antriebseinheit (des Motors) auf das Synchronverhältnis des neuen Gangs gebracht. Jetzt kann (muss aber nicht) die dem Zielgang zugeordnete Kupplungsanordnung geöffnet werden und der Zielgang eingelegt werden, ohne dass hierbei die Synchronisierung der betreffenden Getriebewelle durch die Synchronisiereinrichtung des Zielgangs belastet (überlastet) wird. Durch die unter Umständen noch hohen Schleppmomente kann die Kupplungsanordnung auch im geöffneten Zustand ein Verhalten aufweisen, das mehr dem Verhalten einer geschlossenen Kupplungsanordnung entspricht. Eine geöffnete Kupplungsanordnung erhöht jedoch den Schaltkomfort, so dass es bevorzugt ist, die Kupplungsanordnung des Zielgangs vor dem Einlegen des Zielgangs zu öffnen.

Betreffend die Drehzahlanpassung der Antriebseinheit an das Synchronverhältnis des Zielgangs ist es hingegen bevorzugt, dass diese Drehzahlanpassung im eingerückten Zustand der dem Zielgang zugeordneten Kupplungsanordnung erfolgt, so dass mit der Anpassung des Motors zugleich die Drehzahlanpassung der dem Zielgang zugeordneten Getriebeeingangswelle erreicht wird. Zumindest annähernde Drehzahlgleichheit zwischen der Antriebseinheit und der dem Zielgang zugeordneten Getriebeeingangswelle sollten idealerweise sichergestellt werden.

Weiterbildend wird vorgeschlagen, dass das der Aktiv-Synchronisierungsmodus betreffend ein Hochschalten nur dann freigegeben wird, wenn eine momentane Fahrzeuggeschwindigkeit bezogen auf den Zielgang einer Mindest-Leerlaufdrehzahl der Antriebseinheit entspricht oder diese übersteigt. Nach diesem Weiterbildungsvorschlag kann die aktive Synchronisierung dann zum Einsatz kommen, wenn sich das Fahrzeug mit ausreichender Geschwindigkeit bewegt. Ausreichende Geschwindigkeit bedeutet dabei, dass die auf die Getriebeeingangswelle bezogene Fahrzeuggeschwindigkeit im gewünschten Zielgang größer als die kleinstmögliche Laufdrehzahl des Motors ist.

Es ist aber nicht zwingend, dass bei tiefen Temperaturen bzw. hoher Viskosität der Betriebsflüssigkeit auf ein zugkraftunterbrechungsfreies Schalten verzichtet werden muss.

Nach einem weiteren Beispiel wird für ein Kraftfahrzeug, umfassend einen Antriebsstrang, der aufweist: eine Antriebseinheit, ein Lastschaltgetriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung die ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung ansteuert, um die Kupplungsanordnungen im Einrück- und Ausrücksinne zu betätigen, wobei die Steuereinrichtung dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen vermittels der Betätigungseinrichtung gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren, betreffend ein Rückschalten vorgeschlagen, dass die Steuereinrichtung dafür ausgelegt ist, beim Wechsel von einem höheren Ausgangsgang zu einem niedrigeren Zielgang (Rückschaltung) in Vorbereitung eines Einlegens des Zielgangs auf die Antriebseinheit einzuwirken, dass deren Antriebsmoment über ein von der dem Ausgangsgang zugeordneten Kupplungsanordnung übertragbares Moment ansteigt, so dass die Drehzahl der Antriebseinheit über die momentane Drehzahl der dem Ausgangsgang zugeordneten Getriebeeingangswelle ansteigt und sich einer von der momentanen Fahrzeuggeschwindigkeit abhängigen Synchrondrehzahl für den Zielgang zumindest annähert und diese vorzugsweise zumindest näherungsweise erreicht. Betreffend ein Hochschalten wird für das Kraftfahrzeug alternativ oder zusätzlich vorgeschlagen, dass die Steuereinrichtung dafür ausgelegt ist, beim Wechsel von einem niedrigeren Ausgangsgang zu einem höheren Zielgang (Hochschaltung) in Vorbereitung eines Einlegens des Zielgangs die dem Zielgang zugeordnete Kupplungsanordnung ausgehend von einem ausgerückten Zustand soweit im Einrücksinn zu betätigen, dass die dem Zielgang zugeordnete, bisher sich durch Einwirkung von Getriebeschleppmomenten oder/und Abbremsmomenten höchstens mit einer gegenüber der Synchrondrehzahl für den Zielgang geringeren Drehzahl drehende Getriebeeingangswelle in Richtung einer Annäherung an die Synchrondrehzahl beschleunigt wird und diese vorzugsweise zumindest näherungsweise erreicht.

Zur Vorbereitung des Rückschaltens kann nach dem Erfindungsvorschlag beispielsweise durch einen Eingriff in das Management der Antriebseinheit, insbesondere in das Motormanagement, das Antriebsmoment (Motormoment) über das Kupplungsmoment der momentan Momenten übertragenden Kupplungsanordnung erhöht werden, so dass die Drehzahl der Antriebseinheit (Motordrehzahl) über die betreffende Getriebeeingangswellendrehzahl steigt. Auf diese Weise kann die Drehzahl der Antriebseinheit auf die neue Synchrondrehzahl gebracht werden oder dieser zumindest angenähert werden. Gleichzeitig mit der Erhöhung der Drehzahl der Antriebseinheit oder erst anschließend kann dann die dem Zielgang zugeordnete Kupplungsanordnung geschlossen werden, um die Getriebeeingangswellendrehzahl der dem Zielgang zugeordneten Getriebeeingangswelle ebenfalls auf die neue Synchrondrehzahl zu bringen, die durch die aktuelle Fahrgeschwindigkeit und den Zielgang bestimmt ist. Damit kann nun der neue Gang (Zielgang) eingelegt werden, ohne dass nennenswerte Reibarbeit in der Synchroneinrichtung des Getriebes geleistet werden muss. Es reicht aus, dass die dem Zielgang zugeordnete Kupplungsanordnung während des "Hochschleppens" der Getriebeeingangswelle nur soweit geschlossen wird, dass die Schleppmomente bzw. das Kupplungsmoment ausreichen, um die Getriebeeingangswelle mitzunehmen. Der beschriebene Schaltablauf ermöglicht ein zugkraftunterbrechungsfreies Rückschalten selbst bei Tieftemperaturen.

Wie bereits angesprochen wurde, kann die Steuereinrichtung vorteilhaft dafür ausgelegt sein, gleichzeitig mit der Vergrößerung des Antriebsmoments oder danach die dem Zielgang zugeordnete Kupplungsanordnung im Einrücksinne zu betätigen, um die dem Zielgang zugeordnete Getriebeeingangswelle in Richtung einer Annäherung an die Synchrondrehzahl zu beschleunigen und vorzugsweise zumindest näherungsweise auf die Synchrondrehzahl zu bringen. Ferner wird in Übereinstimmung mit den vorstehenden erläuternden Ausführungen vorgeschlagen, dass die Steuereinrichtung dafür ausgelegt ist, im Zuge mit der Vergrößerung des Antriebsmoments bzw. der Beschleunigung der dem Zielgang zugeordnete Getriebeeingangswelle oder danach die Aktuator-Anordnung derart anzusteuern, dass diese zur Vorbereitung der gegenläufigen Betätigung der Kupplungsanordnungen im Sinne eines Einlegens des Zielgangs auf das Getriebe wirkt.

Betreffend ein Hochschalten ist darauf hinzuweisen, dass beim Hochschalten das "neue" Getriebeeingangswellen-Synchrondrehzahlniveau, also die Synchrondrehzahl des Zielgangs, unter dem des Ausgangsgangs liegt. Ist die dem Zielgang zugeordnete Kupplungsanordnung geöffnet und sind die Schleppmomente des Getriebes so groß, dass die Drehzahl der dem Zielgang zugeordneten Getriebeeingangswelle zwischen 0 und der neuen Synchrondrehzahl liegt, kann durch Schließen der dem Zielgang zugeordneten Kupplungsanordnung die diesem Gang zugeordnete Getriebeeingangswelle auf die neue Synchrondrehzahl gebracht werden, um ein Gangeinlegen zu ermöglichen bzw. zu erleichtern. Diese Art der Schaltung erlaubt selbst bei Tieftemperaturen ein zugkraftunterbrechungsfreies Hochschalten. Hierzu wird speziell vorgeschlagen, dass die Steuereinrichtung dafür ausgelegt ist, im Zuge mit der Beschleunigung der dem Zielgang zugeordnete Getriebeeingangswelle oder danach die Aktuator-Anordnung derart anzusteuern, dass diese zur Vorbereitung der gegenläufigen Betätigung der Kupplungsanordnungen im Sinne eines Einlegens des Zielgangs auf das Getriebe wirkt.

Erreicht die Temperatur der Betriebsflüssigkeit, insbesondere des Kühlöls, durch Aufwärmmaßnahmen, durch das Aufwärmen der als Brennkraftmaschine ausgeführten Antriebseinheit oder durch den Fahrbetrieb eine hinreichende Temperatur, sind also die durch die Viskosität der Betriebsflüssigkeit bei niedrigen Temperaturen bedingten Schleppmomente hinreichend niedrig, kann ein normaler Schalt- und Kupplungsbetrieb mit freier Gangwahl freigegeben werden, beispielsweise durch ein Steuerprogramm. Es wird speziell vorgeschlagen, dass eine/die Steuereinrichtung eine effektive Temperatur der Betriebsflüssigkeit, die durch eine Sensoranordnung erfasst wird oder/und durch die Steuereinrichtung bestimmt wird, auswertet, und in Abhängigkeit von dieser Auswertung einen normalen Schalt- und Kupplungsbetrieb mit freier Gangwahl oder/und Schalten ohne Zugkraftunterbrechung freigibt und sperrt. Besonders zweckmäßig erscheint eine Ausbildung der Steuereinrichtung derart, dass diese den normalen Schalt- und Kupplungsbetrieb dann freigibt, wenn die effektive Temperatur einen Schwellenwert übersteigt oder eine aus der effektiven Temperatur bestimmte Viskosität der Betriebsflüssigkeit unter einen Schwellenwert gefallen ist.

Soweit wenigstens ein Temperatursensor bzw. eine Sensoranordnung zur Erfassung der Temperatur der Betriebsflüssigkeit vorhanden ist, wird der Sensor bzw. wird die Sensoranordnung vorzugsweise dazu verwendet, die Temperatur der Betriebsflüssigkeit direkt zu messen. Für den Fall, dass kein derartiger Sensor zur Verfügung steht, oder ergänzend (beispielsweise für eine größere Sicherheit, insbesondere Redundanz) wird vorgeschlagen, dass die Steuereinrichtung dafür ausgelegt ist, aus wenigstens einem mittels einer Sensoranordnung bestimmten Temperaturwert, der nicht direkt die effektive Temperatur der Betriebsflüssigkeit angibt, oder/und aus wenigstens einem Betriebsparameter des Antriebsstrangs die effektive Temperatur der Betriebsflüssigkeit zu bestimmen, wobei gegebenenfalls mehrere zu verschiedenen Zeiten protokollierte Temperaturwerte bzw. Betriebsparameter oder/und ein beispielsweise mathematisch oder/und durch Kennfelder definiertes Temperaturmodell der Bestimmung zugrundegelegt werden.

Ein mathematisches Temperaturmodell zur Temperaturbestimmung kann beispielsweise auf der Tatsache basieren, dass die Öltemperatur eine Funktion von Außentemperatur, Motortemperatur, Ölmenge und der in die Kupplungsanordnungen eingebrachten Reibenergie ist. Die Reibenergie berechnet sich wie folgt:

$$W_{Reib}(t) \sim \int \ddot{A}n(t) \cdot M_{Kupplung}(t) dt.$$

Dabei bezeichnet Än die Schlupfdrehzahl einer Kupplungsanordnung, also die Differenz zwischen der Kupplungseingangsdrehzahl und der Kupplungsausgangsdrehzahl der betreffenden Kupplungsanordnung und $M_{Kupplung}$ ist das durch die Kupplungsanordnung übertragene Moment. Bei der kurz als Doppelkupplung bezeichenbaren Doppel-Kupplungseinrichtung addieren sich die Reibenergien der beiden Kupplungsanordnungen.

Der Einfluss der Außentemperatur und der Motortemperatur sowie weiterer Einflussgrößen ist in der Regel sehr stark abhängig von der Konstruktion der Kupplungseinrichtung, des Getriebes und des Motors sowie der verwendeten Materialien, des Einbauraums usw. Es kann deshalb kein allgemeines, fahrzeugunabhängiges Modell angegeben werden, sondern es muss für jedes Fahrzeug ein entsprechendes Modell aufgestellt werden.

Im normalen Fahrbetrieb ohne starke Beschleunigung oder ohne Anfahren mit großer Last (z.B. Anfahren mit einem Hänger) erwärmt sich die Betriebsflüssigkeit (das Kühlöl) in der Regel nur relativ langsam. Dies bedeutet, dass sich auch die in den Kupplungsanordnungen auftretenden Schleppmomente nur vergleichsweise langsam verringern. Es ist deshalb vorstellbar, dass die Schleppmomente erst nach zwei bis drei Minuten Fahrt Werte erreichen, die ein normales Synchronisieren ohne Überlastung oder Schädigung der Synchroneinrichtungen zulassen. Vorteilhaft zur Reduzierung der Aufwärmperiode ist auf jeden Fall, die Menge an Betriebsflüssigkeit (Kühlölmenge) so klein wie unbedingt erforderlich zu halten. Zu bedenken ist ferner, dass das auftretende Schleppmoment stark von der momentan zugeführten Betriebsflüssigkeitsmenge (Kühlölmenge) ansteigt. Dies spricht dafür, nur geringe Betriebsflüssigkeitsmengen zuzuführen. Andererseits muss für die erforderliche Kühlung gesorgt werden. Man wird einen Kompromiss zwischen notwendiger Kühlung und möglichst kleinen Schleppmomenten suchen und finden.

Eine Möglichkeit zur Verkürzung der Aufheizdauer besteht in der gezielten Erwärmung durch Einbringen von Verlustleistung in die Kupplungseinrichtung, z.B. durch gleichzeitiges Betätigen beider Kupplungsanordnungen, so dass ein Teil der Leistung der Antriebseinheit (Motorleistung) in der Kupplungseinrichtung in Wärme umgesetzt wird.

Eine weitere Möglichkeit zur Reduzierung des Schleppmoments besteht darin, dass die Zufuhr von Betriebsflüssigkeit dann reduziert oder ganz abgestellt wird, wenn keine Kühlung bzw. Schmierung der Lamellen benötigt wird. Hieraus resultiert unmittelbar eine Reduktion der Schleppmomente, da diese durch zwischen den Lamellen befindliche Betriebsflüssigkeit (Kühlöl) verursacht werden. Es wird nach einem weiteren Beispiel für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, speziell vorgeschlagen, dass die Pumpenanordnung oder eine Flusseinstelleinrichtung durch eine Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, in Abhängigkeit von einem momentanen Zufuhrbedarf an Betriebsmedium zu wenigstens einer der Kupplungsanordnungen den Betriebsflüssigkeitsfluss zu vergrößern und zu verkleinern, derart, dass die Steuereinrichtung bei geringerem Zufuhrbedarf den Betriebsflüssigkeitsfluss verkleinert oder unterbricht und bei größerem Zufuhrbedarf den Betriebsflüssigkeitsfluss vergrößert.

Bei laufender Antriebseinheit wird durch die Fliehkraft die Betriebsflüssigkeit aus den Lamellen der nicht betätigten Kupplungsanordnung geschleudert. Hieraus resultiert eine signifikante Reduktion des Schleppmoments. Es ist vorstellbar, dass durch diese Maßnahme die Schleppmomente soweit reduziert werden, dass sogar das Einlegen von Gängen auf der betreffenden Getriebeeingangswelle möglich ist. So könnte man daran denken, nach einem Anfahren, z.B. im 2. Gang, die zum Anfahren nicht verwendete Kupplungsanordnung, die dem noch eingelegten Rückwärtsgang zugeordnet ist, schnell freizuschleudern und damit für ein Schalten zum nächsten Vorwärtsgang vorzubereiten. Dieses Schalten kann dann in der Regel normal und ohne übermäßige Belastung der Synchroneinrichtungen des Getriebes erfolgen und es ist dann nicht erforderlich, dem Fahrer aus Sicherheitsgründen eine Geschwindigkeitsbegrenzung (wegen des noch eingelegten Rückwärtsgangs) zuzumuten.

Weiterbildend wird vorgeschlagen, dass die Steuereinrichtung den Zuführbedarf im Hinblick auf eine an der Kupplungsanordnung auftretende Verlustleistung oder/und auf einen Schmierbedarf an den Lamellen der Kupplungsanordnung bestimmt. Hierdurch wird stets für ausreichende Kühlung bzw. Schmierung gesorgt.

Nach einem weiteren Beispiel wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass die Pumpenanordnung oder die Flusseinstelleinrichtung oder/und eine einer hydraulischen Betätigungseinrichtung für die Kupplungsanordnungen zugeordnete Pumpenanordnung in einem Umlaufmodus betreibbar sind, in dem durch Umwälzen von Betriebsflüssigkeit unabhängig von einem Zufuhrbedarf an Betriebsmedium zu den Kupplungsanordnungen bzw. unabhängig von der Betätigung der Kupplungseinrichtung Wärmeenergie in das Betriebsmedium eingetragen wird. Diesem Erfindungsvorschlag liegt die Tatsache zugrunde, dass durch Umwälzen von Flüssigkeit Energie in diese eingetragen wird, so dass sich die Flüssigkeit erwärmt. Nach dem Erfindungsvorschlag ist also vorgesehen, die Betriebsflüssigkeit dadurch zu erwärmen und somit die Schleppmomente dadurch zu reduzieren, dass die Betriebsflüssigkeit durch Betreiben der betreffenden Pumpenanordnung bzw. Flusseinstelleinrichtung im Umwälzmodus umgewälzt und damit erwärmt wird. Vorzugsweise ist ein Bypass freischaltbar, um das Betriebsmedium an den Kupplungsanordnungen vorbei umwälzen zu können, so dass durch das Umwälzen selbst die Schleppmomente nicht erhöht werden.

Weiterbildend wird vorgeschlagen, dass eine Steuereinrichtung dafür ausgelegt ist, auf ein ein bevorstehendes Starten des Kraftfahrzeug indizierendes Ereignis anzusprechen und in Reaktion hierauf den Umwälzbetrieb einzuleiten. Beispielsweise kann bei Verwendung einer elektrischen Kühlöl/Drucköpumpe der erfindungsgemäße "Aufwärmvorgang" bereits dann eingeleitet werden, wenn der Fahrer per Fernbedienung das Fahrzeug öffnet oder/und die Fahrertür geöffnet wird. Man kann zur Einsparung elektrischer Energie (etwa um das Anlassen eines Verbrennungsmotors sicherzustellen) auch vorsehen, dass der Umlaufbetrieb erst dann eingeleitet wird, wenn der Verbrennungsmotor läuft.

Allgemein wird vorgeschlagen, dass eine/die Steuereinrichtung dafür ausgelegt ist, den Umwälzbetrieb automatisch dann einzuleiten, wenn wenigstens eine Positiv-Bedingung erfüllt oder/und wenigstens eine Negativ-Bedingung nicht erfüllt ist. Ferner wird allgemein vorgeschlagen, dass eine/die Steuereinrichtung dafür ausgelegt ist, den Umwälzbetrieb automatische zu beenden, wenn wenigstens eine Positiv-Bedingung erfüllt oder/und wenigstens eine Negativ-Bedingung nicht erfüllt ist.

Je nach Auslegung des Kraftfahrzeugs im Hinblick auf den Tieftemperaturbetrieb ist es vorstellbar, dass ein Losfahren erst dann erlaubt wird, wenn die Betriebsflüssigkeit (das Öl) eine hinreichend hohe Temperatur bzw. eine solche Viskosität erreicht hat, dass ein ordnungsgemäßes Schalten möglich ist. Es wird insbesondere vorgeschlagen, dass eine/die Steuereinrichtung dafür ausgelegt ist, ein Starten der Antriebseinheit in Abhängigkeit von einem momentanen Viskositätszustand des Betriebsmediums freizugeben und zu sperren.

Dieser Vorschlag ist von allgemeinem Interesse, bezieht sich also nicht nur auf das Aufwärmen der Betriebsflüssigkeit durch Umwälzen, sondern speziell auch auf alle anderen Möglichkeiten zur Aufwärmung der Betriebsflüssigkeit vor dem Fahrtantritt.

Nach einem weiteren Beispiel wird deshalb für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine Steuereinrichtung dafür ausgelegt ist, ein Starten der Antriebseinheit in Abhängigkeit von einem momentanen Viskositätszustand des Betriebsmediums freizugeben und zu sperren.

Allgemein erscheint die Erwärmung der Betriebsflüssigkeit durch entsprechenden Betrieb der Kupplungseinrichtung von besonderem Interesse. Hierzu kann vorgesehen sein, dass eine/die Steuereinrichtung dafür ausgelegt ist, vermittels einer vorzugsweise hydraulischen Betätigungseinrichtung die Kupplungsanordnungen zu betätigen und in einem Warmlaufmodus wenigstens eine, vorzugsweise beide Kupplungsanordnung mit Schlupf zu betreiben.

In diesem Zusammenhang wird insbesondere daran gedacht, dass die Steuereinrichtung dafür ausgelegt ist, die wenigstens eine Kupplungsanordnung mit Schlupf bei stehendem Fahrzeug gegen eine Abbremswirkung einer Bremseinrichtung arbeiten zu lassen oder/und die wenigstens eine Kupplungsanordnung bei fahrendem Fahrzeug mit Schlupf zu betreiben. Ein Schleifenlassen einer Kupplungsanordnung bzw. der Kupplungsanordnungen bei eingelegtem Gang gegen eine Bremseinrichtung sollte vorzugsweise in einem hohen Gang stattfinden, da hier ein relativ kleines Antriebsmoment an den Rädern wirkt und die Bremseinrichtung damit ein relativ kleines Moment (Bremsmoment) aufbringen muss, um das Fahrzeug zu halten bzw. ein gewünschtes resultierendes Fahrmoment einzustellen.

Es ist sinnvoll, Vorbereitungs- und Unterstützungsmaßnahmen vorzusehen, um das Abstellen des Kraftfahrzeugs oder/und das Gangeinlegen so vorzubereiten, dass das Schleppmomentproblem zumindest gemildert ist, und um durch gezielte Maßnahmen das Losbrechen der Lamellen, also die Überwindung des Haftmoments, zu fördern bzw. zu unterstützen.

So wird zur Vorbereitung des Abstellens speziell vorgeschlagen, dass eine Pumpenanordnung oder Flusseinstelleinrichtung durch eine/die Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, zum Vorbereiten des Abstellens des Kraftfahrzeugs oder beim Abstellen des Kraftfahrzeugs bei ausgerückten Kupplungsanordnungen für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken. Nach diesem Weiterbildungsvorschlag ist vorgesehen, den Betriebsflüssigkeitsstrom, insbesondere Kühlölstrom, zu den Kupplungsanordnungen zu deren Kühlung vorübergehend stark anzuheben, um durch diesen Strom die Lamellen bei geöffneter Kupplungsanordnung auseinander zudrücken. Diese Maßnahme kann vorteilhaft sowohl beim Abstellen des Kraftfahrzeugs mit eingelegten Gängen als auch beim Abstellen des Kraftfahrzeugs mit ausgelegten Gängen angewendet werden und ist von allgemeinem Interesse.

Demgemäß wird nach einem weiteren Beispiel für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass die Pumpenanordnung oder Flusseinstellanordnung durch eine Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, ein bevorstehendes Abstellen des Kraftfahrzeugs oder ein Abstellen des Kraftfahrzeugs zu erkennen und in Vorbereitung des Abstellens oder beim Abstellen bei ausgerückten Kupplungsanordnungen für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken.

Vorzugsweise ist die Steuereinrichtung dafür ausgelegt, den überhöhten Betriebsflüssigkeitsfluss bedarfsweise dann einzustellen, wenn wenigstens eine Positiv-Bedingung erfüllt oder/und wenigstens eine Negativ-Bedingung nicht erfüllt ist.

Eine weitere vorteilhafte Maßnahme ist, vor dem Abstellen des Fahrzeugs die Antriebseinheit kurz auf vergleichsweise hohe Drehzahlen zu bringen (beispielsweise > 2000U/min), um durch die dadurch erhöhten Fliehkräfte die Betriebsflüssigkeit (das Kühlöl) aus den Kupplungsanordnungen zu schleudern. Es wird speziell vorgeschlagen, dass eine/die Steuereinrichtung dafür ausgelegt ist, zum Vorbereiten des Abstellens des Kraftfahrzeugs oder/und beim Abstellen des Kraftfahrzeugs für ein vorgegebenes Zeitintervall bei ausgerückten Kupplungsanordnungen die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Dieser Vorschlag ist sowohl im Zusammenhang mit einem Abstellen des Kraftfahrzeugs mit eingelegten Gängen als auch im Zusammenhang mit einem Abstellen des Fahrzeugs mit ausgelegten Gängen vorteilhaft und überdies von allgemeinem Interesse.

Demgemäß wird nach einem weiteren Beispiel für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, ein bevorstehendes Abstellen des Kraftfahrzeugs oder ein Abstellen des Kraftfahrzeugs zu erkennen und in Vorbereitung des Abstellens oder beim Abstellen für ein vorgegebenes Zeitintervall bei ausgerückten Kupplungsanordnungen die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Für ein besonders effektives Freischleudern der Kupplungsanordnungen kann die Steuereinrichtung vorteilhaft dafür ausgelegt sein, erst die Zufuhr von Betriebsflüssigkeit zu den Kupplungsanordnungen zu unterbrechen und dann für das vorgegebene Zeitintervall die Antriebseinheit bei der gegenüber der Leerlaufdrehzahl deutlich erhöhten Drehzahl zu betreiben.

Ferner kann die Steuereinrichtung vorteilhaft dafür ausgelegt sein, die Antriebseinheit bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

Zur Vorbereitung des Gangeinlegens bzw. Erleichtern des Gangeinlegens wird vorgeschlagen, dass eine/die Steuereinrichtung dafür ausgelegt ist, zum Vorbereiten eines Einlegens wenigstens eines Getriebeganges oder/und beim Einlegen des wenigstens einen Getriebeganges für ein vorgegebenes Zeitintervall bei wenigstens einer ausgerückten Kupplungsanordnung oder/und höchstens einem eingelegten Getriebegang die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen. So kann nach dem Motorstart zur Unterstützung des Gangeinlegens, wenn kein Gang eingelegt ist bzw. wurde, die Motordrehzahl erhöht werden, um die auf die Betriebsflüssigkeit (das Kühlöl) damit erhöhte Fliehkraftwirkung zu nutzen, um das Lamellenpaket bzw. die Lamellenpakete freizuschleudern und damit die Schleppmomente zu reduzieren, so dass das Gangeinlegen erleichtert ist. Dieser Erfindungsvorschlag ist auch von allgemeinem Interesse.

Demgemäß wird nach einem weiteren Beispiel für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, ein bevorstehendes Einlegen des wenigstens einen Getriebegangs oder ein Einlegen des wenigstens einen Getriebegangs zu erkennen und in Vorbereitung des Einlegens oder/und beim Einlegen für ein vorgegebenes Zeitintervall bei wenigstens einer ausgerückten Kupplungsanordnung oder/und höchstens einem eingelegten Getriebegang die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Es wird insbesondere daran gedacht, die Antriebseinheit bei ausgerückten Kupplungsanordnungen oder/und ohne eingelegten Getriebegang bei der gegenüber der Leerlaufdrehzahl deutlich erhöhten Drehzahl zu betreiben.

Weiterbildend wird vorgeschlagen, dass die Steuereinrichtung dafür ausgelegt ist, erst die Zufuhr von Betriebsflüssigkeit zu den Kupplungsanordnungen zu unterbrechen und dann für das vorgegebene Zeitintervall die Antriebseinheit bei der gegenüber der Leerlaufdrehzahl deutlich erhöhten Drehzahl zu betreiben. Man kann die Steuereinrichtung vorteilhaft dafür auslegen, die Antriebseinheit bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

Zur Unterstützung des Losbrechens der Lamellen wird vorgeschlagen, dass eine/die Steuereinrichtung dafür ausgelegt ist, zur Vorbereitung des Einlegens eines Getriebegangs bei stehender oder/und laufender Antriebseinheit vermittels einer vorzugsweise hydraulischen Betätigungseinrichtung die Kupplungsanordnungen wenigstens einmal, vorzugsweise mehrmals aufeinanderfolgend im Ein- und Ausrücksinn zu betätigen, um durch mechanische Verspannung der Kupplungsanordnungen oder/und Verschiebung der Lamellen ein Lösen von Lamellen voneinander, die unter Vermittlung von Betriebsflüssigkeit aneinander haften, zu erreichen oder zumindest zu unterstützen. Es hat sich nämlich herausgestellt, dass etwa bei hydraulisch betätigbaren Kupplungsanordnungen mit in die Kupplungseinrichtung integrierten hydraulischen Nehmerzylindern durch mehrmaliges Betätigen der Kolben der beiden Kupplungsanordnungen die Kupplungsanordnungen verspannt werden und dass leichte Verschiebungen der Lamellen auftreten. Die Art und Weise der Betätigung der Kupplungsanordnungen spielt im Zusammenhang mit dem Vorschlag aber letztlich keine Rolle. Die Betätigung der Kupplungsanordnungen kann vorteilhaft sowohl bei stehendem als auch bei laufendem Motor erfolgen. Bereits diese Betätigung kann ausreichen, um ein Losbrechen der Lamellen zu erreichen. Diese Betätigung kann vor dem Anlassen des Motors bei einem mit eingelegten Gängen abgestellten Fahrzeug wie auch bei einem mit ausgelegten Gängen abgestellten Fahrzeug vorteilhaft durchgeführt werden, und ferner, ggf. bedarfsweise, nach Anlassen des Motors.

Demgemäß wird nach einem weiteren Beispiel für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, wobei den Kupplungsanordnungen eine Steuereinrichtung zugeordnet ist, die dafür ausgelegt ist, die Kupplungsanordnungen vermittels einer vorzugsweise hydraulischen Betätigungseinrichtung zu betätigen, vorgeschlagen, dass die Steuereinrichtung dafür ausgelegt ist, zur Vorbereitung des Einlegens eines Getriebegangs bei stehender oder/und laufender Antriebseinheit vermittels der Betätigungseinrichtung die Kupplungsanordnungen wenigstens einmal, vorzugsweise mehrmals aufeinanderfolgend im Ein- und Ausrücksinn zu betätigen, um durch mechanische Verspannung der Kupplungsanordnungen oder/und Verschiebung der Lamellen ein Lösen von Lamellen voneinander, die unter Vermittlung von Betriebsflüssigkeit aneinander haften, zu erreichen oder zumindest zu unterstützen.

Die Steuereinrichtung kann dafür ausgelegt sein, die Kupplungsanordnungen im Ein- und Ausrücksinn im Hinblick auf das Lösen der Lamellen voneinander bedarfsweise dann zu betätigen, wenn wenigstens eine Positiv-Bedingung erfüllt oder/und wenigstens eine Negativ-Bedingung nicht erfüllt ist.

Das Voneinanderlösen der Lamellen kann auch dadurch erreicht oder zumindest gefördert werden, dass bei laufender Antriebseinheit bewusst Schwingungen in die Kupplungseinrichtung eingebracht werden. Hierzu wird speziell vorgeschlagen, dass eine/die Steuereinrichtung dafür ausgelegt ist, durch entsprechende Ansteuerung der laufender Antriebseinheit auf die Kupplungseinrichtung wirkende Drehungleichförmigkeiten bzw. Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen. Besonders vorteilhaft ist, wenn diese Drehzahlungleichförmigkeiten, insbesondere Schwingungen, im Bereich der Eigenfrequenzen der Kupplungsanordnungen oder/und der Lamellen liegen, so dass gewissermaßen gezielt auf die aneinander anhaftenden Lamellen eingewirkt wird. Dieser Weiterbildungsvorschlag ist auch von allgemeinem Interesse.

Demgemäß wird nach einem weiteren Beispiel für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, durch entsprechende Ansteuerung der laufender Antriebseinheit auf die Kupplungseinrichtung wirkende Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen.

Die Steuereinrichtung kann dafür ausgelegt sein, die auf die Kupplungseinrichtung wirkenden Drehzahlungleichförmigkeiten vermittels der Antriebseinheit bedarfsweise dann zu erzeugen, wenn wenigstens eine Positiv-Bedingung erfüllt oder/und wenigstens eine Negativ-Bedingung nicht erfüllt ist.

Im Falle einer als Verbrennungsmotor ausgeführten Antriebseinheit kann die Steuereinrichtung dafür ausgelegt sein, die auf die Kupplungseinrichtung wirkenden Drehzahlungleichförmigkeiten durch Zylinderabschaltungen oder/und nicht einheitliche oder/und wechselnde Versorgung der Zylinder mit Kraftstoff zu erzeugen. Die gezielt eingebrachten Schwingungen können also z.B. durch Zylinderabschaltungen erreicht werden, wobei vorgesehen sein kann, dass immer die gleichen oder abwechselnd verschiedene Zylinder abgeschaltet werden. Ferner können die Zylinder jeweils mit unterschiedlichen Mengen an Kraftstoff versorgt werden, um bewusst Drehungleichförmigkeiten zu erzeugen.

Im Folgenden wird die Erfindung anhand von Ausführungsbeispielen näher erläutert.

Fig. 1    zeigt in Teilfig. 1a in einer schematischen, beispielhaften Darstellung eine Grundstruktur eines erfindungsgemäßen Kupplungssystems mit einer nasslaufenden Doppelkupplung und in Teilfig. 1 b in einer schematischen Darstellung einen erfindungsgemäßen Kraftfahrzeug-Antriebsstrang samt zugeordneter, die Antriebseinheit, die Doppelkupplung und ein Lastschaltgetriebe ansteuernder Steuereinrichtung und zugehörigen Betätigungseinrichtungen.

Fig. 2    zeigt ein erstes Ausführungsbeispiel eines erfindungsgemäßen Kupplungssystems.

Fig. 3    zeigt das Kupplungssystem der Fig. 2 in Kombination mit einem zugeordneten Getriebe.

Fig. 4    zeigt eine Ausgestaltungsmöglichkeit für einen Kühlölkreislauf des Getriebes der Fig. 3.

Fig. 5    zeigt in der Teilfig. 5a) ein Diagramm, das eine typische Abhängigkeit des in einer Lamellen-Kupplungsanordnung auftretenden Schleppmoments bei tiefen Temperaturen als Funktion der Differenzdrehzahl angibt, und in der Teilfig. 5b) ein entsprechendes Diagramm, das einen typischen Verlauf des Schleppmoments bei sehr kleinen Differenzdrehzahlen samt dem Losbrechmoment im Falle von zusammenklebenden Lamellen angibt.

Fig. 6    zeigt exemplarisch eine typische Getriebe-Synchronisiereinrichtung des Stands der Technik.

Fig. 7    zeigt schematisch ein automatisiertes Doppelkupplungsgetriebe samt vorgeschalteter Doppelkupplung.

Fig. 8    zeigt ein Beispiel für einen erfindungsgemäßen Schaltablauf für eine ZugRück-Schaltung.

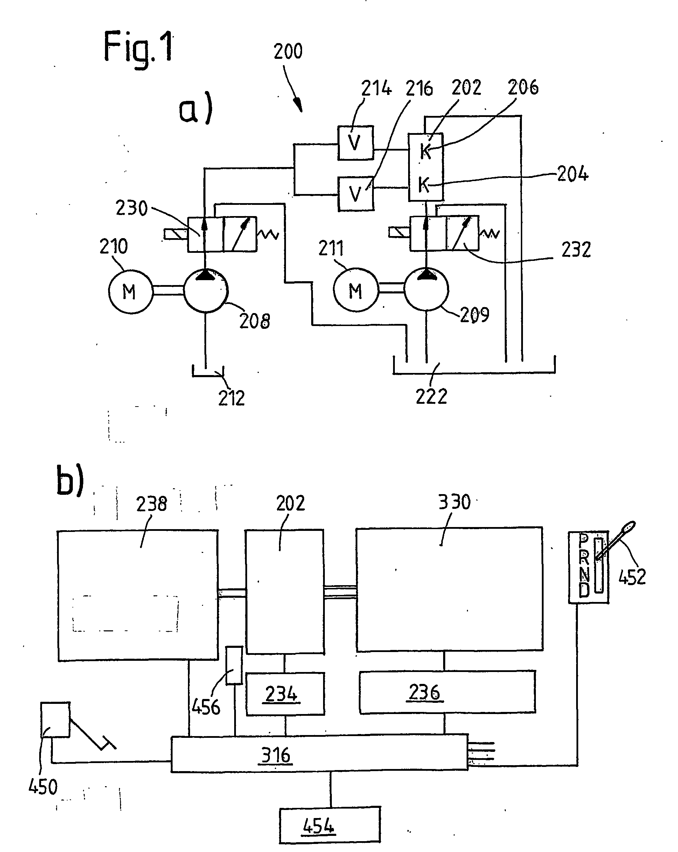

Fig. 1 zeigt in Teilfig. 1 a schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Kupplungsanordnungen, beispielsweise um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden.

Das Kupplungssystem 200 weist zwei voneinander unabhängige Pumpen, nämlich eine erste Pumpe 208 und eine zweite Pumpe 209, auf, die vorzugsweise jeweils durch einen Elektromotor 210 bzw. 211 angetrieben werden. Die erste Pumpe 208 stellt Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnungen sind diese, genauer deren hydraulische Nehmerzylinder, jeweils über ein zugeordnetes Ventil 214 bzw. 216 an der Pumpe 208 angeschlossen. Die Pumpe saugt Druckmedium aus einem Reservoir 212 an.

Die zweite Pumpe 209 stellt einen vergleichsweise großen Volumenstrom an Kühlmedium, insbesondere Kühlöl bereit, das zur Kühlung der Kupplungsanordnungen 204 und 206 dient. Die Pumpe 209 saugt das Kühlmedium, ggf. Öl, aus einem Reservoir 222 an. Es sei angemerkt, dass es nicht zwingend ist, dass es sich bei dem Reservoir 222 um ein gegenüber dem Reservoir 212 gesondertes Reservoir handelt.

Um bei tiefen Temperaturen das Kühlöl schneller auf Betriebstemperatur bringen zu können, ist auf der Abgabeseite der Pumpe 208 sowie auf der Abgabeseite der Pumpe 209 ein Umschaltventil 230 bzw. 232 vorgesehen. Mittels der Ventile kann eine Bypassleitung zum Vorratsbehälter 222 freigeschaltet werden, um durch Umlaufenlassen des Betriebsmediums bzw. Druckmediums an der Kupplungseinrichtung (Doppelkupplung) 202 vorbei Wärme in das Öl einzubringen und dieses damit zu erwärmen. Die Aufwärmzeit zur Erreichung der Betriebstemperatur kann hierdurch deutlich verkürzt werden und es kann dementsprechend relativ schnell ein Zustand erreicht werden, in dem in den Kupplungsanordnungen 204 und 206 keine störenden Schleppmomente auf Grund temperaturbedingt zu hoher Viskosität (zu großer Zähigkeit) mehr auftreten.

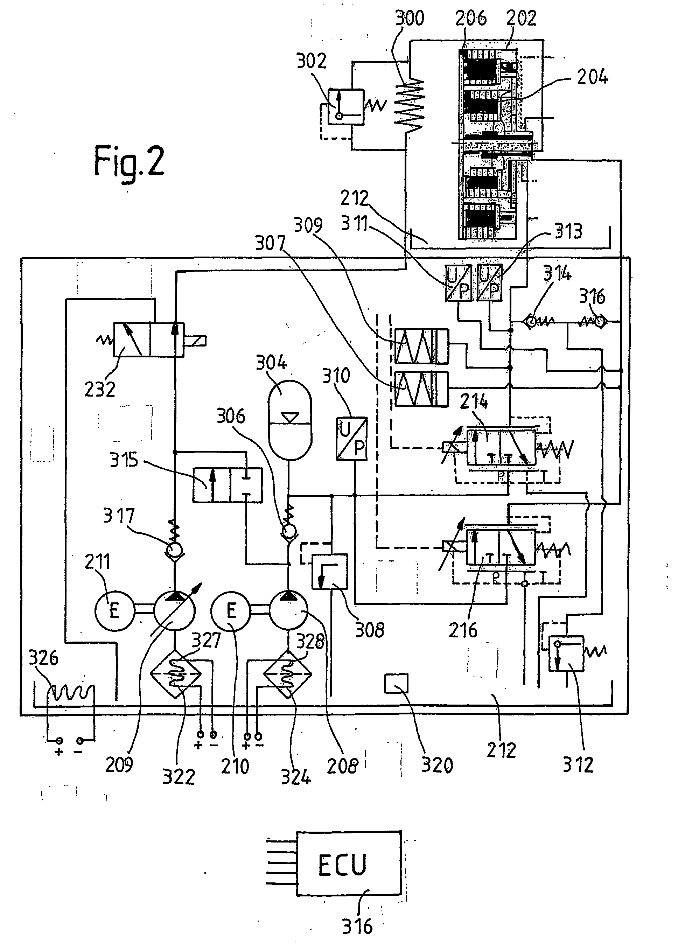

Teilfig. 1 b zeigt einen erfindungsgemäßen Kraftfahrzeug-Antriebsstrang mit der Doppelkupplung 202, einer dieser zugeordneten Betätigungseinrichtung 234 (beispielsweise von der in Fig. 2 gezeigten, die Steuerventile 214 und 216 umfassenden Art), einem mittels einer Betätigungseinrichtung 236 automatisiert betätigbaren Lastschaltgetriebe 330 mit zwei koaxial verlaufenden Getriebeeingangswellen und einer als Verbrennungsmotor ausgeführten Antriebseinheit 238. Die genannten Komponenten sind direkt oder über die jeweils zugeordnete Betätigungseinrichtung von einer beispielsweise als ECU oder/und TCU bezeichenbaren Steuereinrichtung 316 steuerbar. Die Steuereinrichtung 316, die auch als Steuereinheit bezeichenbar ist, kann aus mehreren miteinander kommunizierenden Teil-Steuereinheiten bestehen und Signale von diversen Sensoren und Betätigungselementen erhalten, so etwa von einem Schalthebel 452, der beispielsweise die Schaltstellungen P (Parkmodus), R (Rückwärtsfahrmodus), N (Neutralmodus) und D (Vorwärtsfahrmodus) aufweist, und von einem Bremspedal 450. Ein von der Steuereinrichtung angesteuertes Bremssystem des Fahrzeugs ist in Fig. 1 b mit 454 bezeichnet, und ein von der Steuereinrichtung ansteuerbarer Anlasser ist in Fig. 1 b mit 456 bezeichnet.

Fig. 2 zeigt ein Ausführungsbeispiel eines erfindungsgemäßen Kupplungssystems der in Fig. 1 gezeigten Grundstruktur in näheren Einzelheiten.

Gemäß Fig. 2 wird das Kühlöl der Doppelkupplung 202 über einen Wärmetauscher 300 zugeführt, da es beispielsweise im Falle eines längeren Schlupfbetriebs zu einer merklichen Temperaturerhöhung auch des Öls im Ölsumpf 212 kommen kann. Durch den Wärmetauscher 300 wird die Öltemperatur auf einem zur Kühlung der Doppelkupplung hinreichenden Temperaturniveau gehalten. Da das Kühlöl bei tieferen Temperaturen recht dickflüssig werden kann und aufgrund des Strömungswiderstands des Wärmetauschers 300 bei besonders tiefen Temperaturen unter Umständen nicht mehr genügend Kühlöl die Doppelkupplung erreichen würde bzw. ein zu hoher Öldruck zu Beschädigungen führen könnte, ist ein beispielsweise unter Federvorspannung stehendes Bypassventil 302 vorgesehen, das dann, wenn der Kühlöldruck stromabwärts des Ölkühlers 300 eine vorgegebene Druckschwelle übersteigt, aufmacht und das Kühlöl am Ölkühler 300 vorbei zur Doppelkupplung durchlässt.

Beim Ausführungsbeispiel der Fig. 2 ist im Kupplungsbetätigungs-Druckölkreis ein ein unter Druck stehendes Gaspolster aufweisender Druckölspeicher 304 eingebaut, der von der Pumpe 208 über ein Rückschlagventil 306 geladen wird und über das Ventil 214 und das Ventil 216 an den Betätigungs-Nehmerzylindern der beiden Kupplungsanordnungen 204 und 206 angeschlossen ist. Der Druckölspeicher 304 sorgt für ein gleichmäßiges Druckniveau, was insbesondere im Falle einer Ausbildung der Pumpe 208 als Kolbenpumpe zweckmäßig ist, und ermöglicht, dass für die Pumpe 208 eine Pumpe mit besonders kleinem Fördervolumen ausreicht. Das von der Pumpe 208b pro Zeiteinheit abgegebene Ölvolumen kann also kleiner sein als das während einer Kupplungsbetätigung pro Zeiteinheit benötigte Druckölvolumen.

Der Druckölkreis zwischen dem Rückschlagventil 306 und den Ventilen 214 und 216 ist durch ein Druckbegrenzungsventil 308 gegen einen übermäßig hohen, ggf. zu Beschädigungen führenden Druck des Drucköls gesichert. Der durch den Füllzustand des Speichers 304 bestimmte Druck in diesem Druckölkreis wird durch einen Drucksensor 310 erfasst. Ferner kann den Abgabeseiten der Ventile 214 und 216 eine Drucksensoranordnung, beispielsweise je ein Drucksensor 311 bzw. 313 für beide Ventile, zugeordnet sein, die die jenseits der Ventile herrschenden, auf die hydraulischen Nehmerzylinder wirkenden Hydraulikdrücke erfasst.

Ein weiteres Druckbegrenzungsventil 312 sorgt dafür, dass der jenseits den Ventilen 214 und 216 herrschende, auf die hydraulischen Nehmerzylinder der Kupplungseinrichtungen wirkende Druck einen Maximalwert nicht übersteigt, beispielsweise um ebenfalls Beschädigungen vorzubeugen. Über zwei Rückschlagventile 314 und 316 wird erreicht, dass ein Druckbegrenzungsventil ausreicht, um den Betätigungsdruck von beiden hydraulischen Nehmerzylindern zu überwachen.

Zur Gewährleistung einer guten Regelbarkeit/ Steuerbarkeit der Kupplungsbetätigung kann ein jeweiliger Hydrodämpfer 307 bzw. 309 (beispielsweise umfassend einen federbelasteten Kolben, eine Metallbalgfeder oder dergleichen) parallel zu den beiden hydraulischen Nehmerzylindern der Kupplungseinrichtungen 204 und 206 angeschlossen sein. Durch derartige Hydrodämpfer werden Druckspitzen im Hydrauliksystem abgedämpft.

Für den Fall, dass bei tiefen Temperaturen, also einer hohen Viskosität des Öls, der Druck des Kühlöls zur Kühlung der Kupplung nicht ausreicht, etwa weil die für die Pumpe 209 verwendete hydrodynamische Pumpe keinen hinreichenden Druck erzeugen kann, ist bei der Anordnung gemäß Fig. 2 ein Ventil 315 vorgesehen, über das ein kleiner Volumenstrom aus dem von der Pumpe 208 bereitgestellten Druckölstrom abgezweigt werden kann, um eine Art "Notkühlung" der Kupplungsanordnungen vorzusehen, wenn dies erforderlich ist. Da die ein Öffnen des Ventils 315 erforderlich machende hohe Viskosität des Kühlöls nur bei tiefen Temperaturen vorkommt, bei denen sowieso nur ein geringer Kühlungsbedarf für die Doppelkupplung besteht, reicht ein relativ kleiner "Notkühlölstrom" aus. Diese "Notkühlung" ist überdies nur solange erforderlich, bis die Temperatur des Öls und damit die Viskosität des Öls ausreicht, um eine hinreichende Förderleistung der Kühlölpumpe 209 zu gewährleisten. Anstelle eines Ventils 315 könnte auch eine sogenannte Blende oder Drossel oder dergleichen vorgesehen sein, über die ständig ein kleiner Volumenstrom aus dem von der Pumpe 208 bereitgestellten Druckölstrom in den Kühlkreislauf abgezweigt wird. Ist das das Kühlöl nur im Bedarfsfall abzweigende Ventil 315 vorgesehen, kann die Pumpe 208 eventuell auch kurzfristig in einem Überlastbetrieb betrieben werden, um in der kurzen Zeitspanne bis zur hinreichenden Erwärmung des Öls ausreichend Kühlöl bereitzustellen. Da es sich in der Regel nur um sehr kurze Bedarfszeiträume handelt, wird die Lebensdauer der Pumpe 208 dadurch nicht wesentlich verkürzt. Um unabhängig vom Betriebszustand der Pumpe 209 zu gewährleisten, dass von der Druckpumpe 208 in den Kühlkreislauf geliefertes Öl nicht zurück in den Ölsumpf 212 fließt, kann mit der Pumpe 209 ein Rückschlagventil 317 in Reihe geschaltet, insbesondere der Pumpe nachgeschaltet, sein.

Auch beim Beispiel der Fig. 2 ist das Bypassventil 232 vorgesehen, um bei tiefen Temperaturen einen Umlaufmodus einstellen zu können, in dem die Pumpe 209 das Kühlöl an der Doppelkupplung 202 vorbei umwälzt. Man kann das Ventil auch so ausführen, dass ein Teil des von der Pumpe 209 bereitgestellten Kühlölflusses zur Doppelkupplung 202 geführt wird und der andere Teil über die Bypassleitung zum Ölsumpf 212 zurückgeführt wird. Damit ist zumindest ein eingeschränkter Kupplungsbetrieb bzw. Fahrbetrieb des den Antriebsstrang aufweisenden Kraftfahrzeugs auch im Umwälzmodus möglich.

Fig. 2 zeigt noch eine elektronische Steuereinheit ECU (Bezugszeichen 316), die in Abhängigkeit von einer jeweiligen Führungsgröße die Steuer/ Regel-Ventile 214 und 216 betätigt. Es kann ferner vorgesehen sein, dass der Steuereinheit Messwerte von diversen Sensoren, beispielsweise vom Drucksensor 310 und anderen Drucksensoren (einschließlich ggf. den Sensoren 311 und 313), sowie von Temperaturfühlern oder Temperatursensoren zugeführt bekommt. Gedacht wird insbesondere an einen oder mehrere Temperatursensoren, die die Temperatur des Kupplungskühlölkreislaufs (Pumpe 209, Kühler 300 oder Bypassventil 302, Kupplungseinrichtung 202, Sumpf 212) erfasst. Ein entsprechender, beispielsweise im Kupplungsölsumpf 212 angeordneter und die Temperatur des im Kreislauf umlaufenden bzw. im Sumpf enthaltenen Öls erfassender Sensor 320 ist schematisch dargestellt. Die elektronische Steuereinheit kann ferner das auf die Zeiteinheit bezogene Fördervolumen der Pumpe 209 oder/und einen durchgelassenen Volumenstrom eines im Kreislauf angeordneten Volumenstrom-Einstellventils (nicht dargestellt) steuern oder regeln, beispielsweise auf Grundlage des vom Sensor 320 erfassten Temperatursignals. Auf diese Weise kann der Temperaturhaushalt der Kupplungseinrichtung 202 bzw. des Kupplungskühlölkreislaufs beeinflusst werden. Durch Einstellung des Umwälzungsgrads im Kühlkreislauf kann Einfluss auf die Abkühlgeschwindigkeit im Kühler 300 genommen werden (größeres oder kleiners ÄT am Kühler) und es können turbulente Strömungszustände einerseits oder laminare Strömungsverhältnisse andererseits ausgenutzt werden.

Der Vollständigkeit halber soll noch darauf hingewiesen werden, dass die mit 322 und 324 bezeichneten Komponenten in Fig. 2 Ölfilter darstellen. Alternativ oder zusätzlich können Ölfilter auch auf der Abgabeseite der jeweiligen Pumpe 208 bzw. 209 vorgesehen sein. Es versteht sich, dass die elektronische Steuereinheit 216 neben den Steuer-Regel-Ventilen 214 und 216 auch die Ventile 232 und 315 situationsabhängig betätigt.

Um nach dem Starten des Kraftfahrzeugs insbesondere bei tiefen Umgebungstemperaturen das Kühlöl und damit die Kupplungseinrichtung bzw. Doppelkupplung 202 auf Betriebstemperaturen zu bringen und insbesondere die Zähflüssigkeit des Kühlöls schnell soweit herabzusetzen, dass das System voll funktionsfähig ist, kann eine elektrische Öl-Erwärmungsanordnung vorgesehen sein, die beispielsweise wenigstens ein Heizelement 326 im Ölsumpf 212 oder/und wenigstens ein in die Ansaugleitung der Pumpe 209, beispielsweise in den Filter 322, integriertes Heizelement 327 aufweist. Auch in die Ansaugleitung der Pumpe 208, beispielsweise in den Filter 224, kann wenigstens ein Heizelement integriert sein. Als Heizelemente können beispielsweise etwa 30 mm x 50 mm große Heizplättchen verwendet werden, die auf ihrer Oberfläche eine Art Heizwendel aufweisen und z. B. eine Heizleistung von ca. 300 W abgeben können. Auch andersartige Heizelemente, beispielsweise in der Art von Glühkerzen für Dieselmotoren, sind einsetzbar. Eine andere Möglichkeit ist, eine Wärmeenergiespeicheranordnung, etwa ein sogenannter Latenzspeicher, vorzusehen.

Durch Integration wenigstens eines Heizelements in einen jeweiligen Ansaugtrakt der Kühlölpumpe 209 oder/und der Druckölpumpe 208 kann gezielt das tatsächlich gepumpte Öl erwärmt werden, ohne dass zwangsweise das gesamte Ölvolumen erwärmt werden muss. Dementsprechend wird elektrische Energie gespart. Ferner kann gewährleistet werden, dass nur vorgewärmtes Öl von der betreffenden Pumpe gepumpt wird.

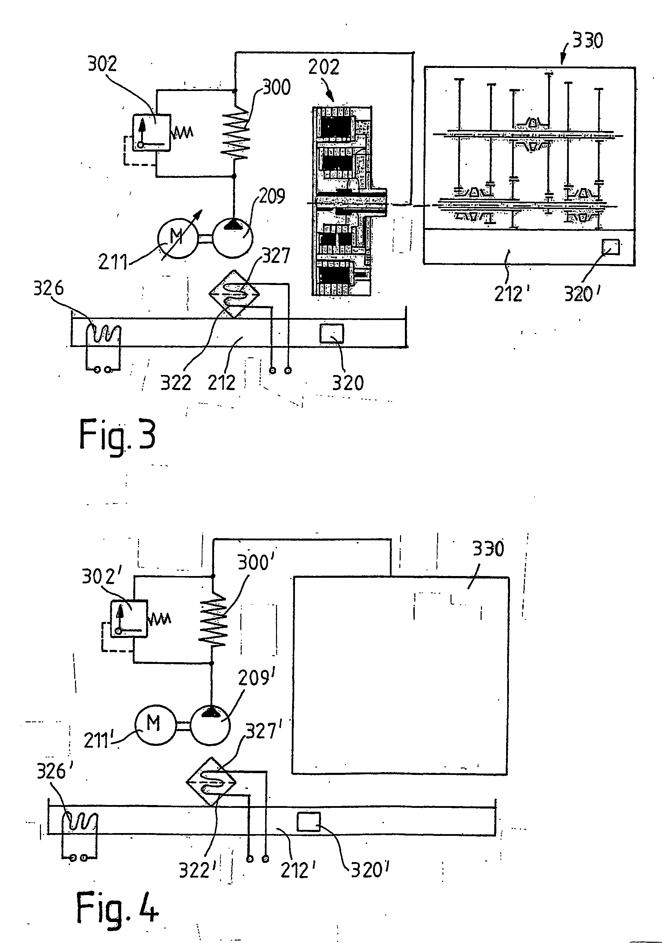

Fig. 3 zeigt das Kupplungssystem der Fig. 2 (nicht alle Komponenten sind gezeigt) in Kombination mit einem Doppelkupplungsgetriebe 330. Das vorzugsweise automatisiert betätigbare Getriebe 330 kann einen eigenen, gegenüber dem Kühlölkreislauf der Kupplungseinrichtung 202 gesonderten Kühlölkreisölauf aufweisen, beispielweise von der in Fig. 4 dargestellten Art. Eine von einem Motor 211' angetriebene Ölpumpe 209' saugt Kühlöl aus einem Reservoir (dem Getriebesumpf) 212' an. Das geförderte Kühlöl wird normalerweise über einen Kühler 300' den zu kühlenden Komponenten des Getriebes 330 zugeführt. Zur Vermeidung von zu hohen Drükken im Kühlölkreislauf bei tiefen Temperaturen ist ein beispielsweise druckbetätigtes Bypassventil 302' vorgesehen, das bei Überschreitung einer Druckschwelle eine den Kühler 300' umgehende Bypassleitung freigibt. Der Getriebekühlölkreislauf entspricht insoweit dem Kupplungskühlölkreislauf gemäß Fig. 2 und 3. Der Kühler 300' mit der Bypassleitung kann, wie in Fig. 4 gezeigt, zwischen der Pumpe 209' und dem Getriebe (ggf. Automatik-Getriebe) 330 angeordnet sein. Es ist aber auch denkbar, dass Kühler und Bypass-Schaltung dem Getriebe bzw. Getriebe-Automat nachgeschaltet sind. Dem Getriebekühlölkreislauf kann ein Temperatursensor 320' zugeordnet sein, der die Temperatur des umlaufenden Kühlöls misst und entsprechende Messwerte beispielsweise an die elektronische Steuereinheit ECU der Fig. 2 liefert. Gemäß Fig. 3 und 4 ist der Temperatursensor 320' im Getriebesumpf 212' angeordnet.

In Abweichung von den vorstehenden Ausführungen zu Figuren 3 und 4 kann man für die Doppelkupplung und das Getriebe auch einen gemeinsamen bzw. situationsabhängig zusammenschaltbaren Kühlölkreislauf vorsehen.

Anstelle des druckbetätigten Bypassventils 302 im Falle des Kupplungskühlölkreislaufs bzw. 302' im Falle des Getriebekühlölkreislaufs kann ein elektrische betätigbares Umschaltventil, beispielsweise ein 3-2-Wege-Ventil vorgesehen sein, um bedarfsabhängig bzw. gemäß einer Wärmemanagement-Strategie (etwa zum gezielten Erreichen und Halten einer Soll-Betriebstemperatur) eine den Kühler 300 umgehende Bypassleitung freizugeben, so dass das Kühlöl an dem Kühler 300 bzw. 300' vorbei zur Doppelkupplung 202 bzw. zu den zu kühlenden Getriebekomponenten geführt wird, bzw. diese Bypassleitung wieder zu sperren.

Die Doppelkupplung 202 kann vorteilhaft nach einem Starten des Kraftfahrzeugs, beispielsweise im Falle von tiefen Umgebungstemperaturen, mit definiertem Schlupf betrieben werden, um das Kühlöl möglichst schnell auf Betriebstemperatur aufzuwärmen. Die Aufwärmung des Kühlöls erfolgt durch im Schlupfbetrieb an den Lamellen auftretende Reibung. Um eine Überhitzung des betreffenden Lamellenpakets bzw. der Doppelkupplung zu vermeiden und die gewünschte Erwärmung des Kühlöls möglichst schnell zu erreichen, sollte während des Schlupfbetriebs ständig ein beispielsweise von der Pumpe 209 bereitgestellter Kühlölstrom fließen.

Die insbesondere bei niedrigen Außentemperaturen bei einem etwa im freien abgestellten Kraftfahrzeug auftretende hohe Viskosität eines verwendeten Kühlöls kann durchaus erhebliche Probleme verursachen. Durch die bei tiefen Temperaturen (etwa Öltemperaturen kleiner als 0°C) auftretende erhöhte Zähigkeit des Öls können in den Lamellen-Kupplungsanordnungen sehr hohe Schleppmomente auftreten (bis zu Werten größer als 25 Nm) gegenüber bei Betriebstemperatur (ca. 90°C) auftretenden Schleppmomenten beispielsweise kleiner als 2 Nm. Ferner können auf Grund von durch zwischen den Lamellen befindliches Öl zusammenklebenden Lamellen Losbrech- bzw. Loslösmomente bis über 50 Nm auftreten. In Folge der hohen Schlepp- bzw. Losbrechmomente kann ein Einlegen eines Ganges praktisch unmöglich werden, weil herkömmliche Synchronisiereinrichtungen des Getriebes nicht für die Überwindung derartig hoher Momente ausgelegt sind. Kann man keine Gänge einlegen bzw. nicht schalten, so ist eine Bewegung des Kraftfahrzeugs nicht möglich.

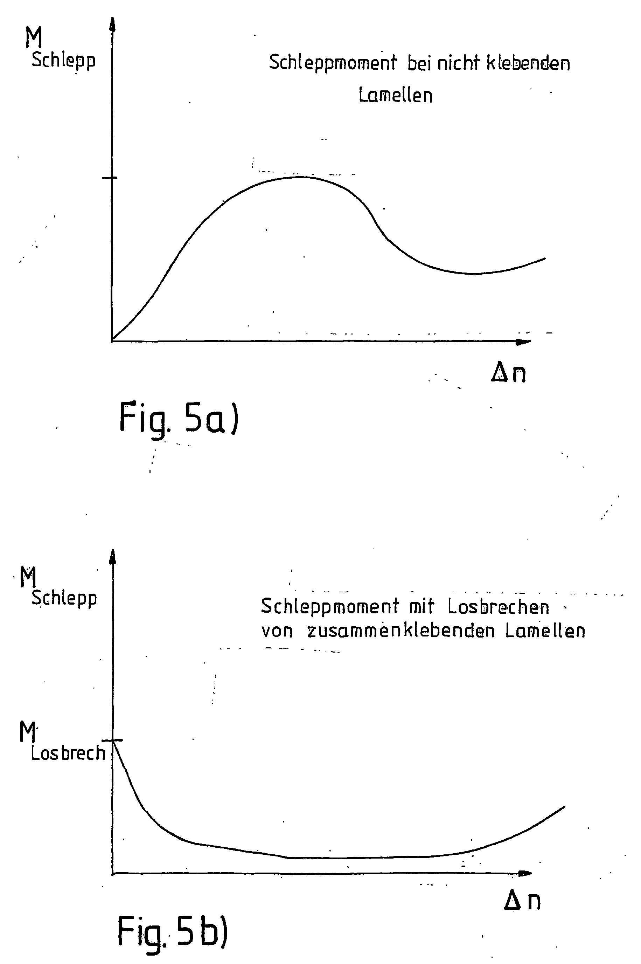

Fig. 5a zeigt einen typischen bzw. exemplarischen Verlauf des bei tiefen Temperaturen in der Kupplungseinrichtung auftretenden Schleppmoments auf Grund von zwischen den Lamellen befindlichem Kühlöl entsprechend hoher Viskosität als Funktion der Differenzdrehzahl Än zwischen Eingangsseite und Ausgangsseite der betreffenden Kupplungsanordnung. Fig. 5b zeigt das bei tiefen Temperaturen auftretende Losbrechmoment auf Grund von zusammenklebenden Lamellen und den Übergang zum Schleppmoment gemäß Fig. 5a. Ergänzend wird auf den Aufsatz "Schleppmomente an nasslaufenden Lamellenbremsen" von N. Holzer und D. Frey, Friedrichshafen, sowie B. Matthes, Heidelberg, in VDI BERICHTE 1323, Seiten 469 bis 489 auf Grund einer Tagung der VDI-Gesellschaft Entwicklung Konstruktion Vertrieb am 03. und 04.03.1997 in Fulda "Kupplungen in Antriebssystemen '97" verwiesen.

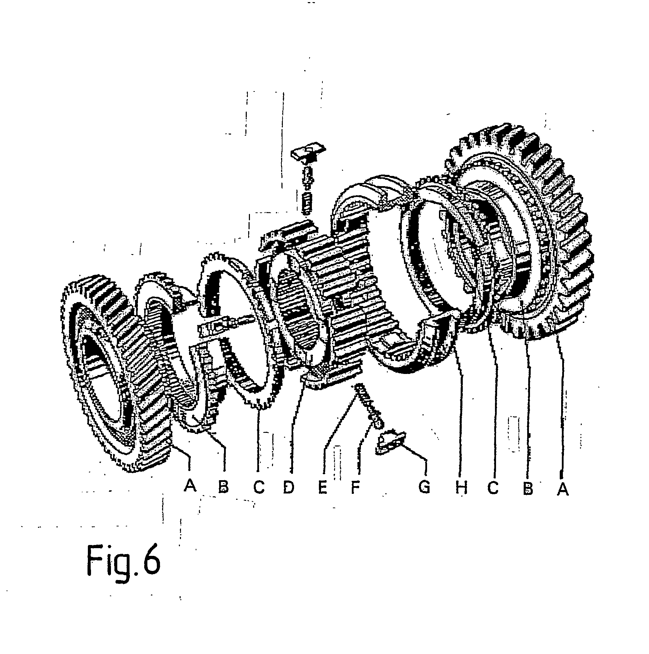

Fig. 6 zeigt ein Beispiel für eine herkömmliche Einkonus-Synchronisierung nach dem System Borg-Warner (ZF) mit einem nadelgelagerten Losrad A, einem Kupplungskörper B mit Schaltverzahnung und Reibkonus, einem Hauptfunktionsträger - Synchronring C mit Gegenkonus und Sperrverzahnung, einem Synchronkörper D mit Innenverzahnung für den Formfluss mit einer Getriebewelle und Außenverzahnung für die Schaltmuffe, eine Druckfeder E, einem Kugelbolzen F, einem Druckstück G und einer Schaltmuffe H mit Klaueninnenverzahnung. Würde man versuchen, bei stehendem Kraftfahrzeug und nicht laufendem Motor einen Gang einzulegen, so kann es passieren, dass das Einlegen des Ganges daran scheitert, dass die Schaltverzahnung des Kupplungskörpers des jeweiligen Gangrats mit den Zahnflanken des zugehörigen Gegenrads der Schaltmuffe der Synchroneinrichtung zusammentrifft, so dass die Verzahnungen nicht in Mitnahmeeingriff treten können. Das Einlegen eines Ganges ist also nur dann möglich, wenn die Schaltverzahnung des Kupplungskörpers auf die Zahnzwischenräume des zugehörigen Gegenrads trifft.

Damit ist es bei herkömmlicher Ausbildung der zugeordneten Aktuatorik kein echter Lösungsansatz, wenn man daran denken sollte, zur Vermeidung des Einlegeproblems bei tiefen Temperaturen auf Grund nicht für die Überwindung der Schleppmomente ausgelegten Synchronisiereinrichtungen einen Anfahrgang bei stehendem Kraftfahrzeug im Zustand noch nicht laufender Antriebseinheit einzulegen.

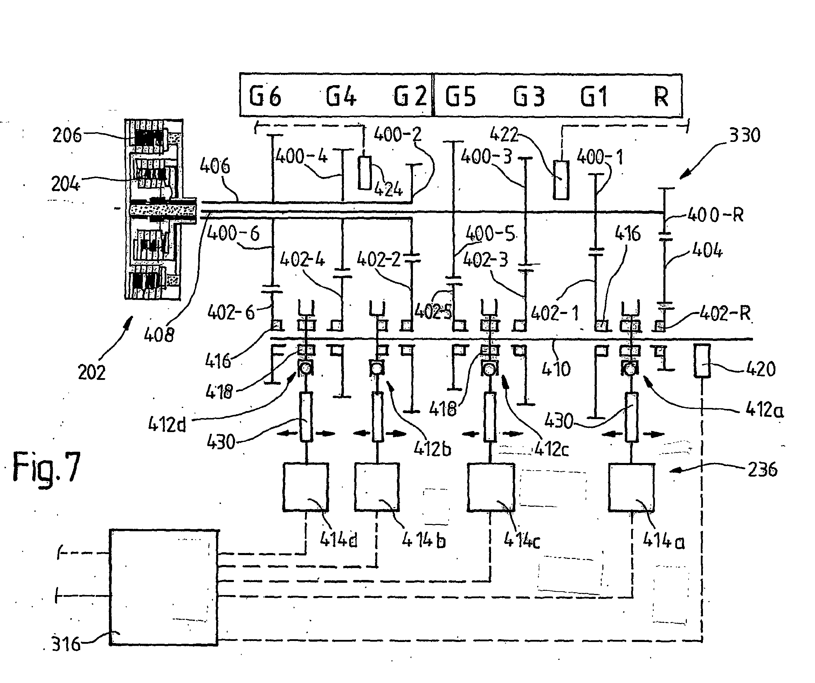

In Fig. 7 ist ein Doppelkupplungsgetriebe 330 schematisch dargestellt, dass sieben Gänge, nämlich sechs Vorwärtsgänge G1, G2, G3, G4, G5 und G6 und ein Rückwärtsgang R aufweist. Den Vorwärtsgängen ist jeweils ein Zahnradpaar, bestehend aus einem Antriebsrad 400-1, 400-2, 400-3, 400-4, 400-5 und 400-6 und einem Abtriebsrad 402-1, 402-2, 402-3, 402-4, 402-5 und 402-6, zugeordnet. Der Rückwärtsgang R weist zusätzlich zu einem Antriebsrad 400-R und einem Abtriebsrad 402-R ein die Drehrichtung umkehrendes Zwischenrad 404 auf, das mit dem Antriebsrad 400-R und dem Abtriebsrad 402-R kämmt. Die den Gängen G2, G4 und G6 zugeordneten Antriebsräder sind drehfest mit einer radial äußeren Getriebeeingangswelle 406 verbunden und die den Gängen G1, G3, G5 und R zugeordneten Antriebsräder sind drehfest mit einer radial inneren Getriebeeingangswelle 408 verbunden. Die jeweiligen Abtriebsräder sind drehbar auf einer Getriebeausgangswelle 410 gelagert und mit dieser zur Schaltung der Gänge über zugeordnete Schalt- und Synchronisiervorrichtungen 412a, 412b, 412c und 412d drehfest verbindbar. Die Schalt- und Synchronsiervorrichtungen 412a, 412c und 412d sind doppelseitig wirksam ausgebildet, d.h., dass durch diese jeweils alternativ einer von zwei Gängen schaltbar ist, im Falle der Synchronisiervorrichtung 412a der erste Vorwärtsgang G1 oder der Rückwärtsgang R, im Falle der Synchronisiervorrichtung 412c der dritte Vorwärtsgang G3 oder der fünfte Vorwärtsgang G5 und im Falle der Synchronsiervorrichtung 412d der vierte Vorwärtsgang G4 oder der sechste Vorwärtsgang G6. Die Synchronisiervorrichtung 412b hingegen ist nur einseitig wirksam ausgebildet und dient zum Schalten nur des zweiten Vorwärtsgangs G2.

Wie aus der schematischen Figur ersichtlich bzw. schon erwähnt, sind die Getriebeeingangswellen 406 und 408 koaxial zueinander angeordnet, und es sind die ungeradzahligen Gänge G1, G3 und G5 und der Rückwärtsgang R der zentral angeordneten Getriebeeingangswelle 408 und die geradzahligen Gänge G2, G4 und G6 der als Hohlwelle ausgebildeten Getriebeeingangswelle 406 zugeordnet. Die beiden Getriebeeingangswellen stehen jeweils mit nur einer der Kupplungsanordnungen 204 und 206 in Verbindung, beispielsweise die Getriebeeingangswellen 406 mit der Ausgangsseite der Kupplungsanordnung 206 und die Getriebeeingangswelle 208 mit der Ausgangsseite der Kupplungsanordnung 204. Die Eingangsseiten der beiden Kupplungsanordnungen stehen jeweils mit der Abtriebswelle der Antriebseinheit, beispielsweise ein Verbrennungsmotor, in Verbindung.

Während des normalen Fahrbetriebs ist einer der Getriebegänge eingelegt und die diesem zugeordnete Kupplungsanordnung geschlossen. Bei einem Schaltvorgang wird zuerst ein Zielgang, beispielsweise der nächsthöhere oder nächstniedrige Vorwärtsgang, geschaltet und dann erfolgt vorzugsweise die an sich bekannte Überschneidungsschaltung, bei der das Antriebsmoment von der einen zur anderen Getriebeeingangswelle verlagert wird, um ein zugkraftunterbrechungsfreies Schalten vorzusehen.

Beim gezeigten Ausführungsbeispiel ist das Doppelkupplungsgetriebe 330 als automatisiertes Schaltgetriebe ausgebildet. Dazu ist den Schalt- und Synchronisiervorrichtungen 412a bis 412d jeweils ein beispielsweise elektromotorischer Schaltstellantrieb 414a, 414b, 414c bzw. 414d zugeordnet, die auf die jeweilige Schalt- und Synchronisiervorrichtung wirken, beispielsweise durch eine kraft- oder/und formschlüssige Betätigungsverbindung. Durch die Schaltstellantriebe können die Schalt- und Synchronisiervorrichtungen in axialer Richtung bewegt und mit Stellkräften beauftragt werden, wie durch die Doppelpfeile angedeutet ist. An den Abtriebsrädern und den Schalt- und Synchronisiervorrichtungen sind Mitnahmeformationen 416 und 418 schematisch dargestellt, die zur Kopplung des jeweiligen Abtriebsrads mit der Getriebeausgangswelle 410 in gegenseitigen Eingriff treten.

Die Schaltstellantriebe sind über zugeordnete Steuerleitungen mit der Steuereinrichtung 316 verbunden und durch diese ansteuerbar. Eine Drehzahl der Getriebeausgangswelle bzw. Getriebeabtriebswelle 410 kann durch einen Drehzahlsensor 420 detektiert werden. Es können ferner noch einer jeweiligen der beiden Getriebeeingangswellen zugeordnete und deren Drehzahl erfassende Drehzahlsensoren 422 und 424 vorgesehen sein, so dass die Steuereinrichtung 316 ggf. Informationen über alle drei Drehzahlen erhält. Eine andere, alternativ oder zusätzlich vorzusehende Möglichkeit ist, dass die Drehzahl der Abtriebswelle der Antriebseinheit durch einen mit der Steuereinrichtung verbundenen Drehzahlsensor erfasst wird.

Zur Erleichterung des Einlegens von Gängen bei einem mit ausgelegten Gängen abgestellten Kraftfahrzeug sind die die Betätigungsverbindungen herstellenden, beispielsweise in der Art von Schaltgabeln ausgeführten Verbindungs- und Betätigungselemente zwischen den Schalt- und Synchronisiervorrichtungen und dem jeweiligen Schaltstellantrieb elastisch ausgeführt, beispielsweise mit einem jeweiligen Federabschnitt 430. Wird bei stehendem Kraftfahrzeug und noch nicht laufendem Motor durch einen entsprechenden Befehl von der Steuereinrichtung 316 ein Schaltstellantrieb, beispielsweise der Schaltantrieb 414a, im Sinne eines Einlegens des ersten Gangs oder des Rückwärtsgangs betätigt, so wird entweder unmittelbar der Gang eingelegt, sofern die Mitnahmeformationen des betreffenden Abtriebsrads und die zugeordneten Mitnahmeformationen der betreffenden Schalt- und Synchronisiervorrichtung in gegenseitigen Eingriff treten (also, wenn beispielsweise die Zähne der einen Verzahnung auf die Zahnzwischenräume der anderen Verzahnung treffen), oder der Gang wird nicht eingelegt, wenn die sogenannten Mitnahmeformationen nicht in gegenseitigen Eingriff treten können.

Ist ein derartiger Eingriff nicht möglich (etwa weil die Zähne der einen Verzahnung auf die Zähne der anderen Verzahnung treffen), so wird der als Kraftspeicher dienende Federspeicher 430 gespannt. Wird nun der Anlasser bei geöffneten Kupplungen betätigt, so wird unter der Voraussetzung tiefer Temperaturen, also des Auftretens von Losbrech- oder/und Schleppmomenten in den Kupplungsanordnungen, den kupplungs- bzw. motorseitigen Zahnrädern eine Drehbewegung erteilt, weil der Antriebsstrang auf Grund der Losbrech- bzw. Schleppmomente trotz geöffneter Kupplungsanordnungen nicht vollständig vom Motor getrennt ist. Die Zahnräder auf der Getriebeabtriebsseite stehen hingegen, da eine Parksperre eingelegt ist oder/und das Fahrzeug bei entriegelter Parksperre steht. Es kommt damit zu einer Relativ-Drehbewegung zwischen den Abtriebsrädern einerseits und den zugeordneten Schalt- und Synchronisiervorrichtungen, die diese in eine relative Drehstellung bringt, in der die Mitnahmeformationen in gegenseitigen Eingriff treten (etwa weil die Zähne der einen Verzahnung auf die Zahnzwischenräume der anderen Verzahnung treffen). Damit ist ein Einlegen eines Gangs im Falle eines mit ausgelegten Gängen abgestellten Kraftfahrzeugs auch bei tiefen Temperaturen möglich.

Alternativ oder zusätzlich können die Schaltstellantriebe auch dafür ausgebildet sein, für kurze Zeiträume gegenüber normalen Stellkräften vergößerte Stellkräfte aufzubringen, die im Dauerbetrieb die Schalt- und Synchronisiervorrichtungen übermäßig belasten würden, aber für spezielle Situationen (wie etwa eine hohe Viskosität des den Lamellen-Kupplungsanordnungen zugeordneten Kühlöls auf Grund niedriger Temperatur) vorteilhaft ein Gangeinlegen bzw. Gangwechseln ermöglichen. Eine gewisse Reduzierung der Lebensdauer der Schalt- und Synchroniservorrichtungen könnte man notfalls in Kauf nehmen, da derartige Situationen in der Regel nur selten vorkommen werden. Überdies kann die Steuereinrichtung 316 dafür ausgelegt sein, die überhöhten Betätigungskräfte nur für kurze Zeitintervalle und unter bestimmten Bedingungen einzustellen, so dass in der Praxis keine nennenswerte Verkürzung der Lebensdauer der Schalt- und Synchronisiervorrichtungen eintreten wird.

Die Steuereinrichtung 316 kann auch einen Betätigungsmodus aufweisen, in dem beim Schalten von einem Ausgangsgang zu einem Zielgang die dem Zielgang zugeordnete Getriebeeingangswelle nicht nur durch die dem Zielgang zugeordnete Schalt- und Synchronisiervorrichtung, sondern auch durch eine andere Schalt- und Synchronisiervorrichtung, die an sich dafür vorgesehen ist, beim Schalten zu einem der gleichen Getriebeeingangswelle zugeordneten, vom Zielgang verschiedenen Gang tätig zu werden. Beispielsweise könnte zur Vorbereitung und beim Einlegen des ersten Gangs G1 nicht nur die Schalt- und Synchronisiervorrichtung 412a sondern zusätzlich auch die Schalt- und Synchronisiervorrichtung 412c betätigt werden, damit diese Vorrichtungen gemeinsam die Getriebeingangswelle 408 einer Drehzahl zumindest anzunähern, die der momentanen Fahrzeuggeschwindigkeit unter Berücksichtigung der Getriebübersetzung im Zielgang (im Beispielsfall der erste Gang) entspricht. Umgekehrt kann zum Einlegen des dritten Gangs G3 oder des fünften Gangs G5 neben der Schalt- und Synchronisiervorrichtung 412c zusätzlich die Schalt- und Synchronisiervorrichtung 412a in diesem Sinne betätigt wird. Entsprechendes gilt für die der Getriebeeingansgwelle 406 zugeordneten Gänge G2, G4 und G6. Es können jeweils zwei Schalt- und Synchronisiervorrichtungen (412b und 412d) bzw. (412a und 412c) in diesem Sinne gleichzeitig betätigt werden.

Es ist allerdings Sorge zu tragen, dass nicht versehentlich der falsche Gang eingelegt wird. Dies kann beispielsweise dadurch vermieden werden, dass die Steuereinrichtung 316 die Drehzahl der betreffenden Getriebeeingangswelle und der Getriebeausgangswelle 420 (oder/und der Abtriebswelle der Antriebseinheit) unter Berücksichtigung der Getriebeübersetzungen, insbesondere der Getriebeübersetzung des nicht einzulegenden Gangs, miteinander vergleicht und vor Erreichen des Synchronpunktes des nicht einzulegenden Gangs die auf die diesem nicht einzulegenden Gang zugeordnete Schalt- und Synchronsiervorrichtung wirkende Betätigungskräfte aufhebt oder zumindest hinreichend reduziert.

Durch die an der dem nicht einzulegenden Gang zugeordneten Schalt- und Synchronisiervorrichtung auftretende Reibarbeit kann auch bei tiefen Temperaturen trotz in der Kupplungseinrichtung 202 auftretenden Schleppmomenten ein Gang eingelegt werden bzw. von einem Ausgangsgang zu einem Zielgang geschaltet werden.

Die Steuereinrichtung 316 ist vorteilhaft dafür ausgelegt, über die Schaltstellantriebe gleichzeitig wenigstens zwei Gänge einzulegen. Es wird insbesondere daran gedacht, dass eine Parksperre dadurch realisiert ist, dass auf der gleichen Getriebeeingangswelle zwei Getriebegänge eingelegt werden.

Vorteilhaft können aber auch wenigstens ein Gang auf der einen Getriebeingangswelle und wenigstens ein Gang auf der anderen Getriebeeingangswelle eingelegt werden, wobei vorzugsweise wenigstens ein Vorwärtsgang und der Rückwärtsgang zu den eingelegten Gängen gehören. Diese Gänge werden vorzugsweise vollautomatisch durch die Steuereinrichtung eingelegt, wenn das Kraftfahrzeug abgestellt wird. Soll dann wieder losgefahren werden, so könnte es sein, dass auf Grund zu niedriger Außentemperaturen große Schleppmomente in der Kupplungseinrichtung auftreten, so dass kein Gang mehr eingelegt werden kann (es sei denn, dass die obigen Vorschläge realisiert sind). Sind hingegen, wie hier vorgeschlagen, der Rückwärtsgang auf der einen Getriebeeingangswelle und wenigstens ein Vorwärtsgang auf der anderen Getriebeeingangswelle eingelegt, so kann durch Einkuppeln der einen und Ausgekuppelthalten bzw. Auskuppeln der anderen Kupplungsanordnung entweder der Vorwärtsgang oder der Rückwärtsgang zum Anfahren aktiviert werden. Für viele Situationen wird es auch ausreichen, wenn nur ein Gang, etwa der Vorwärtsgang, eingelegt wird, vorzugsweise automatisch durch die Steuereinrichtung 316.

Abgesehen von dem Aspekt der Parksperre macht es durchaus auch in anderer Hinsicht Sinn, auf wenigstens einer der Getriebeeingangswellen, vorzugsweise auf beiden Getriebeeingangswellen, mehrere Gänge einzulegen, wenn das Kraftfahrzeug abgestellt wird. Dies ermöglicht nämlich zum Anfahren eine Auswahl aus mehreren Gängen. Es sind dann alle nicht benötigten Gänge auszulegen, beispielsweise alle Vorwärtsgänge bis auf einen Anfahrgang und den Rückwärtsgang.

Um beim Anlassen des Motors eine unkontrollierte Bewegung des Kraftfahrzeugs auf Grund wenigstens eines eingelegten Gangs und der bei tiefen Temperaturen auftretenden Schleppmomente bzw. Losreismomente in der Kupplungseinrichtung zu vermeiden, ist vorzugsweise eine Sicherheitsfunktionalität der Steuereinrichtung 316 vorgesehen. Die Steuereinrichtung 316 kann beispielsweise ein Starten des Motors nur dann zulassen, wenn gleichzeitig die Fußbremse 450 (vgl. Fig. 1 b) betätigt wird. Das Starten oder nicht Starten kann auch von der momentanen Stellung des Schalthebels 452 abhängig gemacht werden, beispielsweise ein Starten nur im Parkmodus P erlaubt werden.

Ferner ist es aus Sicherheitsgründen vorteilhaft, wenn die Sicherheitsfunktionalität die Aufhebung des Parkmodus, in dem beispielsweise zwingend eine Parksperre aktiviert ist, und den Wechsel in den Rückwärtsfahrmodus R bzw. den Vorwärtsfahrmodus D trotz entsprechender Betätigung des Schalthebels 452 nur dann zulässt, wenn gleichzeitig die Fußbremse 450 betätigt wird. Hierdurch wird verhindert, dass es zu einer unkontrollierten Bewegung des Kraftfahrzeugs kommt, wenn die Parksperre ausgelegt bzw., im Falle von noch nicht eingelegten Gängen, ein Vorwärts-Anfahrgang oder der Rückwärtsgang eingelegt wird. Eine andere Möglichkeit ist, dass das Aufheben des Parkmodus bzw. - im Falle von noch nicht eingelegten Gängen - das Einlegen eines Gangs mit einer Betätigung des Fahrzeug-Bremssystems 454 zwangsgekoppelt ist. Trotz nicht betätigtem Bremspedal wird dann automatisch dafür gesorgt, dass die Fahrzeugbremsen betätigt werden, um eine unkontrollierte Bewegung des Fahrzeugs zu vermeiden.

Man kann vorsehen, dass auf Grundlage der in der Kupplungseinrichtung auftretenden Schleppmomente eine Fahrzeug-Kriechfunktion bereitgestellt wird.

Hierzu kann die Steuereinrichtung 316 eine entsprechende Kriech-Funktionalität aufweisen.

Vorzugsweise ist eine Kompensation der auf die Fahrzeugräder wirkenden Kupplungs-Schleppmomente zu Null oder einem Kriechwert oder einem Berghaltewert (im Fall einer Fahrzeug-Berghaltefunktion) vorgesehen, und zwar beispielsweise vermittels des Fahrzeug-Bremssystems oder/und vermittels einer aufeinander abgestimmten Betätigung der beiden Kupplungsanordnungen in dem Falle, dass auf der der einen Kupplungsanordnung zugeordneten Getriebeeingangswelle ein Vorwärtsgang und auf der der anderen Kupplungsanordnung zugeordneten Getriebeeingangswelle der Rückwärtsgang eingelegt ist. Allgemein gesprochen, kann mittels des Fahrzeug-Bremssystems oder durch entsprechende Betätigung wenigstens einer der Kupplungsanordnungen ein an den Fahrzeugrädern wirksames Antriebsmoment auf Grund von Kupplungs-Schleppmomenten oder/und Kupplungs-Lamellenhaftmomenten zu Null oder einem Sollwert kompensiert werden, indem die Steuereinheit 316 das Fahrzeugbremssystem 454 oder/und die Kupplungseinrichtung 202 bzw. die betreffende Kupplungsanordnung entsprechend ansteuert.

Es wird im Folgenden noch einmal auf den Zustand Bezug genommen, bei dem gleichzeitig ein Vorwärtsgang und gleichzeitig ein Rückwärtsgang eingelegt sind. Vorzugsweise können diese Gänge beim Anfahren und beim anschließenden Fahren des Kraftfahrzeugs eingelegt bleiben, und es kann durch gegenläufige Betätigung der beiden Kupplungsanordnungen zwischen dem Vorwärtsgang und dem Rückwärtsgang gewechselt werden, ohne dass es einer Betätigung des Getriebes bedarf. So lange der Rückwärtsgang eingelegt ist, sollte durch eine Sicherheitsfunktionalität der Steuereinrichtung 316 dafür gesorgt werden, dass eine maximale Fahrzeuggeschwindigkeit nicht überschritten wird. Man kann aber auch ein automatisches Auslegen des Rückwärtsgangs für den Fall vorsehen, dass die Fahrzeuggeschwindigkeit einen Schwellenwert übersteigt.

Die Steuereinrichtung 316 kann vorteilhaft einen Aktiv-Synchronsiermodus aufweisen, in dem durch entsprechende Ansteuerung des Motors (allgemein der Antriebseinheit) oder/und durch entsprechende Betätigung der Kupplungsanordnungen die Drehzahl der dem Zielgang zugeordneten Getriebeeingangswelle dem Synchronverhältnis des Zielgangs zumindest angenähert, vorzugsweise die Drehzahl dieser Getriebeeingangswelle auf das Synchronverhältnis des Zielgangs gebracht wird, um dann das Einlegen des Zielgangs zu erleichtern bzw. zu ermöglichen. Die Schalt- und Synchronsiervorrichtungen werden dann entsprechend geschont, und es bedarf nicht unbedingt des Einsatzes von mehreren Schalt- und Synchronsiervorrichtungen gleichzeitig, und es kann auch auf das Einlegen eines Ganges unter Ausnutzung einer Vorspannung der Betätigungsverbindung zwischen der betreffenden Schalt- und Synchronsiervorrichtung und dem zugeordneten

Schaltstellantrieb verzichtet werden. Eine Zugkraftunterbrechung während des Schaltens ist bei diesem Aktiv-Synchronsiermodus in Kauf zu nehmen.

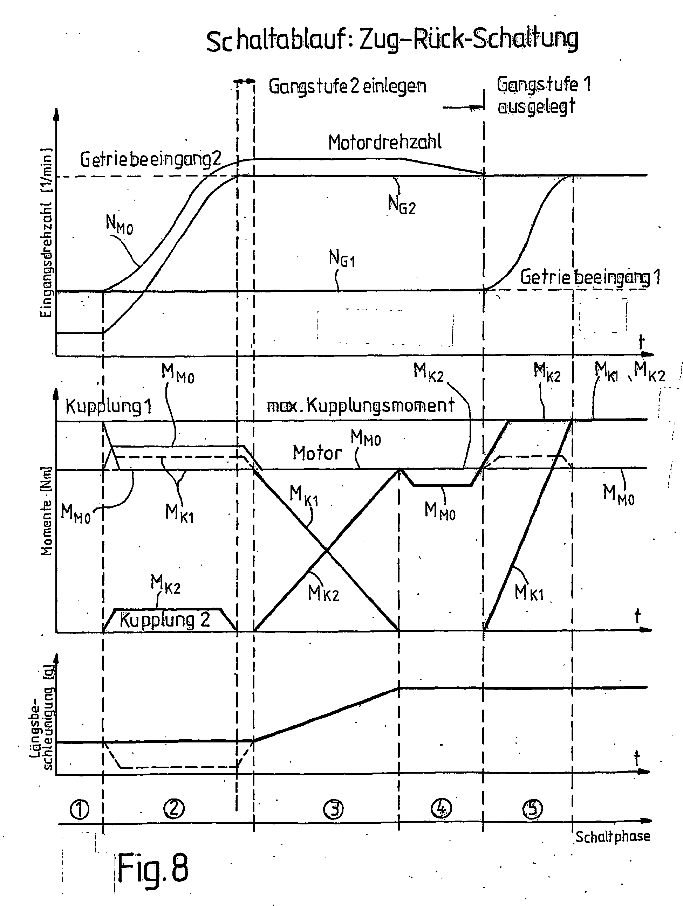

Fig. 8 zeigt ein Beispiel für einen Schaltablauf bei einer Zug-Rückschaltung, der ein zugkaftunterbrechungsfreies Rück-Schalten ermöglicht, ohne dass an den Schalt- und Synchronsiervorrichtungen zur Synchronisierung der dem Zielgang zugeordneten Getriebeeingangswelle übermäßige Reibarbeit geleistet werden muss, selbst bei großen Schleppmomenten in der Kupplunsgeinrichtung.

Der Fig. 8 liegen die folgenden Annahmen und die folgende Nomenklatur zu Grunde:

Es wird auf Getriebeeingangswellen 1 und 2, Kupplungen 1 und 2 und Gänge 1 und 2 Bezug genommen. Die Getriebeeingangswelle 1 kann die Getriebeeingangswelle 406 und die Getriebeeingangswelle 2 kann die Getriebeeingangswelle 408 sein, oder umgekehrt. Dementsprechend kann die Kupplung 1 der Kupplungsanordnung 204 und die Kupplung 2 der Kupplungsanordnung 206 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang). Es wird in einem Zug-Betriebszustand von einem größeren, der Getriebeeingangswelle 1 zugeordneten Gang 1 zu einem kleineren, der Getriebeeingangswelle 2 zugeordneten Gang 2 geschaltet.

Bei der Schaltungsart Zug-Rück liefert der Motor ein positives Moment an das Getriebe. Dieses Moment wird über die Getriebeeingangswelle 1 übertragen. Die Kupplung 1 ist mit der Getriebeeingangswelle 1 verbunden, die Kupplung 2 ist mit der Getriebeeingangswelle 2 verbunden. Im Ausgangszustand ist die Kupplung 1 vollständig geschlossen und befindet sich somit in Überanpressung. Die Kupplung 2 ist beim gezeigten Beispiel im Ausgangszustand offen. Die Getriebeeingangswelle 1 dreht sich damit im Ausgangszustand mit der Motordrehzahl. Auf der Getriebeeingangswelle 1 ist ein Gang eingelegt, so dass Kraftfluss zwischen der Getriebeeingangswelle 1 und der Getriebeausgangswelle hergestellt ist.

Ein bevorzugter, fünf Schaltphasen umfassender Schaltablauf ist in Fig. 8 schematisch dargestellt. Die Phasen sind in Fig. 8 durch arabische Ziffern 1 bis 5 in Kreisen bezeichnet und werden im Folgenden als Phasen I bis V angesprochen. Mögliche Varianten und Ausgestaltungen der Schaltphasen sind in der Fig. gestrichelt dargestellt. Zur Unterscheidung der verschiedenen Kurven und Kurvenabschnitte sind diese mit den Kennungen $N_{Mo}$ für die Motordrehzahl, $N_{G1}$ für die Drehzahl der Getriebeeingangswelle 1, $N_{G2}$ für die Drehzahl der Getriebeeingangswelle 2, $M_{Mo}$ für das Motormoment, $M_{K1}$ für das Moment der Kupplung 1 und $M_{K2}$ für das Moment der Kupplung 2 versehen. Ein sich aus der positiven Längsbeschleunigung (vgl. unterstes Teildiagramm) des Kraftfahrzeugs ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase I bis zum Ende der Schaltphase V könnte beispielsweise etwa 0,5s bis 1 s dauern.

Wäre in Abweichung von den oben gemachten Annahmen und der Darstellung im Diagramm in Fig. 8 die Kupplungsanordnung 2 zu Beginn ebenfalls vollständig geschlossen, so könnte diese zur Einleitung des Schaltvorgangs in Phase I vollständig geöffnet werden.

In Phase II wird das Kupplungsmoment der Kupplung 1, $M_{K1}$, auf das in Phase I gültige Moment des Motors abgesenkt. Das Antriebsmoment des Motors wird vergrößert und die Kupplung 2 wird leicht eingerückt, so dass nun das Motormoment größer als das Moment der Kupplung 1 ist, so dass Kupplungsschlupf auftritt und die Motordrehzahl ansteigt, bis gegen Ende der Phase II eine Drehzahl über der Synchrondrehzahl des Zielgangs 2 erreicht wird. Durch das leichte Einkuppeln der Kupplung 2 wird die Getriebeeingangswelle 2 hoch beschleunigt, so dass sich deren Drehzahl der Synchrondrehzahl des Zielgangs annähert. Am Ende der Phase II wird der Zielgang (Gang 2) eingelegt, so dass unter Mitwirkung der dem Zielgang zugeordneten Synchronsiervorrichtung des Getriebes die Getriebeeingangswelle 2 die Synchrondrehzahl des Zielgangs erreicht und es damit zum Einlegen des Zielgangs kommt.

In Phase III wird nach Erreichen der gewählten Motordrehzahl über der Drehzahl der Getriebeeingangswelle 2 das Motormoment wieder auf das ursprüngliche Moment abgesenkt, um ein weiteres Ansteigen der Motordrehzahl zu verhindern. Die Kupplung 1 befindet sich im Schlupf und eine gewählte Schlupfdrehzahl zwischen der Getriebeeingangswelle 1 und der Motordrehzahl wird vermittels der Kupplung 1 eingeregelt. Die Kupplung 2 wird gesteuert geschlossen. Dadurch wird ein geregeltes Öffnen der Kupplung 1 ausgelöst, da die vorher gewählte Schlupfdrehzahl nur konstant gehalten werden kann, wenn die Summe der Momente, die von den beiden Kupplungen auf die Getriebeeingangswellen und damit - unter Vermittlung des Getriebes - auf die Getriebeausgangswelle übertragen wird, konstant gleich dem gewählten Motormoment ist. Die Kupplung 2 übernimmt immer mehr Motormoment, bis die Kupplung 1 vollständig geöffnet ist. Die Kupplung 2 kann jetzt das komplette Motormoment übertragen und wird nicht weiter geschlossen. An Stelle eines gesteuerten Schließens der Kupplung 2 und eines geregelten Öffnens der Kupplung 1 könnte man auch ein gesteuertes Öffnen der Kupplung 1 und ein geregeltes Schließen der Kupplung 2 vorsehen.

In Phase IV wird durch ein Absenken des Motormoments unter das Kupplungsmoment die Motordrehzahl auf die Drehzahl der Getriebeeingangswelle 2 heruntergezogen. In Phase V wird dann die Kupplung II vollständig geschlossen. Die Kupplung 1 kann ebenfalls geschlossen werden, was zum Ansteigen der Drehzahl $N_{G1}$ der Getriebeeingangswelle 1 auf das Niveau der Getriebeeingangswelle 2 führt. Das Motormoment wurde beim Schaltablauf gemäß Diagramm schon am Ende der Phase IV auf den ursprünglichen Wert zurückgeführt.

In Phase II ist noch eine Variante gezeigt, nach der das Moment der Kupplung 1 nicht ganz auf den Wert des anfänglichen Motormoments reduziert wird, um einen unerwünschten negativen Zwischenbeschleunigungsvorgang des Fahrzeugs auf Grund der Beschleunigung der Getriebeeingangswelle 2 zu vermeiden. Ferner kann man in Phase V das Motormoment auf einen Wert über den ursprünglichen Wert erhöhen, um die für die Beschleunigung der Getriebeeingangswelle 1 benötigte Beschleunigungsenergie zu kompensieren.

Man kann erreichen, dass der gesamte Beschleunigungsverlauf während des Kuppelvorgangs monoton ohne Zwischenverzögerungs- oder Zwischenbeschleunigungsvorgänge verläuft, indem zu jeder Zeit das anfängliche Motormoment vermittels der Getriebeeingangswellen ins Getriebe eingeleitet und entsprechend den Getriebeübersetzungen im Ausgangs- und Zielgang zur Getriebeausgangswelle übertragen wird. An der Getriebeausgangswelle wird demenstprechend zu jeder Zeit ein im Wesentlichen konstant bleibendes (Phasen I, II, IV, V) bzw. monoton (vorzugsweise streng monoton, z.B. linear) steigendes (Phase III) Antriebsmoment.

Gemäß einem Schaltablauf, wie in Fig. 8 beispielhaft vorgeschlagen, ist selbst bei tiefen Temperaturen bzw. zähflüssigem Kühlöl ein Rückschalten ohne nennenswerte Belastung der Synchronisiervorrichtungen möglich, ohne dass auf das Lastschalten ohne Zugkraftunterbrechung verzichten zu müssen.

Beim Hochschalten liegt das dem Zielgang zugeordneten Getriebeeingangswellen-Synchrondrehzahiniveau unter dem des alten Gangs. Ist die dem Zielgang zugeordnete Kupplung offen, so kann vermittels einer gesonderten Abbremseinrichtung oder/und auf Grund von Schleppmomenten des Getriebes die Drehzahl der dem Zielgang zugeordnete Getriebeeingangswelle zwischen Null und der neuen Synchrondrehzahl liegen. Man kann dann durch Schließen der dem Zielgang zugeordneten Kupplung die dem Zielgang zugeordnete Getriebeeingangswelle auf die neue Synchrondrehzahl bringen, um ein Gangeinlegen zu ermöglichen bzw. zu erleichtern. Auf das Lastschalten ohne Zugkraftunterbrechung braucht dabei nicht verzichtet werden.

Die vorstehenden, auf die Beherrschung der Probleme im Zusammenhang mit Schleppmomenten in der Kupplungseinrichtung bei tiefen Temperaturen zielenden Maßnahmen sind bei normalen Betriebsbedingungen nicht unbedingt mehr erforderlich. Es kann deshalb vorgesehen sein, dass die Steuereinrichtung 316 selbsttätig einen normalen Schalt- und Kupplungsbetrieb mit freier Gangwahl freigibt. Hierzu kann die Steuereinrichtung von einem beispielsweise die Temperatur des Kühlöls messenden Temperatursensor ein Temperatursignal erhalten und dieses mit einem Schwellenwert vergleichen. Ggf. kann aus der gemessenen Temperatur die Viskosität des Kühlöls bestimmt werden und diese mit einem vorgegebenen Schwellenwert verglichen werden. Die Steuereinrichtung kann auch dafür vorgesehen sein, aus anderen Messwerten, ggf. Temperaturwerten, auf die für die Schleppmomente maßgebliche Temperatur zu schließen, beispielsweise unter Zugrundelegung eines Temperaturmodels.

Zur aktiven Reduktion der Schleppmomente kann die Steuereinrichtung 316 eine Funktionalität aufweisen, die dazu dient, die Pumpe 209 (vgl. Fig. 2) so anzusteuern, dass nur so viel Kühlöl den Kupplungsanordnungen zugeführt wird, wie momentan erforderlich ist, etwa im Hinblick auf eine in der Kupplungseinrichtung auftretende Verlustleistung oder/und im Hinblick auf einen Schmierbedarf an den Lamellen. Ggf. kann der Kühlölfluss zu den Kupplungsanordnungen auch vollständig unterbrochen werden, wenn momentan kein Zufuhrbedarf besteht.

Man kann auch vorsehen, dass die Steuereinrichtung dafür ausgelegt ist, ein Starten des Motors nur dann freizugeben, wenn die Viskosität des Kühlöls einen maximalen Wert nicht überschreitet bzw. die Temperatur des Kühlöls nicht unter einem kritischen Wert liegt. Diese Maßnahme ist insbesondere im Zusammenhang mit hier angesprochenen Maßnahmen von Interesse, die eine Erwärmung des Kühlöls unabhängig vom Laufen des Motors ermöglichen (vgl. Heizungen 322, 324 und der Umwälzmodus im Zusammenhang mit dem Ventil 232). Man kann auch vorsehen, dass das Abstellen des Kraftfahrzeugs so vorbereitet wird, dass bei der Wiederinbetriebnahme des Kraftfahrzeugs die in der Kupplungseinrichtung auftretenden Schleppmomente und Losbrechmomente minimiert und im Idealfall sogar weitgehend vermieden werden. So kann die Steuereinrichtung dafür ausgebildet sein, ein bevorstehendes Abstellen des Kraftfahrzeugs bzw. ein Abstellen desselben zu erkennen (die Steuereinrichtung kann hierzu beispielsweise auf eine Verstellung des Schalthebels 452 in die Stellung P ansprechen), und in Reaktion hierauf beim Abstellen nach Ausrücken der Kupplungsanordnungen für eine gewisse Zeit einen überhöhten Kühlöldruck bzw. einen überhöhten Kühlölfluss zu den Kupplungsanordnungen einzustellen, um die Lamellen der Kupplungsanordnungen auseinander zu drücken, die Außenlamellen und die Innenlamellen also voneinander zu trennen. Dies erfolgt vorzugsweise völlig automatisch durch entsprechende Ansteuerung der Pumpe 209 durch die Steuereinrichtung 316. Alternativ oder zusätzlich hierzu kann in Reaktion auf das Erkennen eines bevorstehenden Abstellens des Kraftfahrzeugs bzw. des Abstellens selbst nach Ausrücken der Kupplungsanordnungen die Antriebseinheit durch die Steuereinrichtung 316 derart angesteuert werden, dass die Antriebseinheit für eine gewisse Zeit bei einer gegenüber der Leerlaufdrehzahl deutlich erhöhten Drehzahl läuft, so dass durch Fliehkraftwirkung das Kühlöl aus den Lamellenpaketen nach radial außen weggeschleudert wird. Hierzu wird vorzugsweise zuvor der Kühlölfluss zu den Lamellenpaketen unterbrochen.

Der Betrieb der Antriebseinheit bei ausgerückten Kupplungsanordnungen mit einer gegenüber der Leerlaufdrehzahl deutlich erhöhten Drehzahl ist auch zur Vorbereitung eines Einlegens wenigstens eines Getriebegangs vorteilhaft, da die Schleppmomente um so kleiner sein werden, je weniger Kühlöl sich zwischen den Lamellen befindet. Die Steuereinrichtung 316 ist vorzugsweise deshalb auch dafür ausgelegt, das Einlegen eines Ganges bzw. den Wunsch, dass ein Gang eingelegt werden soll, zu erkennen und die Antriebseinheit bei ausgerückten Kupplungsanordnungen entsprechend anzusteuern. Beispielsweise kann die Steuereinrichtung 316 auf ein Verstellen des Schalthebels 452 in die Stellung R bzw. D ansprechen und erst nach dem vorgeschlagenen Hochdrehen der Antriebseinheit den betreffenden Gang tatsächlich einzulegen.

Es hat sich gezeigt, dass auch durch die Betätigung der Kupplungsanordnungen selbst ein Lösen von aneinander klebenden Lamellen erreicht werden kann bzw. dieses Lösen zumindest unterstützt werden kann. Dieser nützliche Effekt ist auf im Zuge der Kupplungsbetätigung auftretende mechanische Verspannung der Kupplungsanordnungen und die Verschiebung der Lamellen bei der Betätigung zurückzuführen. Die Steuereinrichtung 316 ist vorzugsweise dafür ausgelegt, auf den Gangeinlegewunsch bzw. das Einlegen des Ganges anzusprechen und vor dem Einlegen des Ganges bzw. vor Abschluss des Einlegevorgangs die Kupplungsanordnungen wenigstens einmal, vorzugsweise mehrmals aufeinander folgend im Ein- und Ausrücksinn zu betätigen, um den angesprochenen hilfreichen Effekt zu erzielen.

Es hat sich ferner gezeigt, dass auch auf die Kupplungseinrichtung wirkende Drehzahlungleichförmigkeiten, wie etwa Drehschwingungen, ein Lösen von aneinander anhaftenden Lamellen bewirken oder zumindest unterstützen. Die Steuereinrichtung 316 ist deshalb vorzugsweise dafür ausgelegt, die Antriebseinheit, insbesondere die Brennkraftmaschine, derart anzusteuern, dass bei laufender Antriebseinheit derartige Drehzahlungleichförmigkeiten auftreten. Beispielsweise können bei einem Verbrennungsmotor Zylinder abgeschaltet oder Zylinder abwechselnd oder uneinheitlich mit Kraftstoff versorgt werden.

Es werden unter anderem Maßnahmen zur Beherrschung bzw. Verringerung von in einer Lamellen-Mehrfach-Kupplungseinrichtung auftretenden Schleppmomenten auf Grund temperaturbedingter erhöhter Viskosität bzw. Zähigkeit einer den Lamellen in Betrieb zugeführten Betriebsflüssigkeit vorgeschlagen, um eine Inbetriebnahme eines Kraftfahrzeugs bzw. den Betrieb des Kraftfahrzeugs auch bei tiefen Temperaturen zu ermöglichen.

## Patentansprüche

1. Kraftfahrzeug, umfassend einen Antriebsstrang, der aufweist: eine Antriebseinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit zuführbar ist,
wobei dem Getriebe eine Aktuator-Anordnung (236; 414) und eine die Aktuator-Anordnung ansteuernde Steuereinrichtung (316) zugeordnet ist, unter deren Vermittlung der ersten und der zweiten Getriebeeingangswelle zugeordnete Getriebegänge ein- und auslegbar sind,
**dadurch gekennzeichnet,**
**dass** in ersten Situationen die Steuereinrichtung (316) dafür ausgelegt ist, beim Abstellen des Fahrzeugs in Reaktion darauf vermittels der Aktuator Anordnung wenigstens einen Getriebegang dann automatisch einzulegen, wenn eine momentane Außentemperatur unter einem Schwellenwert liegt, und dass in zweiten Situationen beim Abstellen des Fahrzeugs kein Gang eingelegt wird.

2. Kraftfahrzeug nach Anspruch 1, **dadurch gekennzeichnet, dass** eine manuell bedienbare Wähleinrichtung (452) zum Wählen verschiedener Fahrzeug- oder/und Getriebemodi vorgesehen ist, und dass die Steuereinrichtung (316) in Reaktion auf ein Wählen eines Parkmodus (P) den wenigstens einen Getriebegang einlegt.

3. Kraftfahrzeug nach Anspruch 1 oder 2, **dadurch gekennzeichnet, dass** die Steuereinrichtung (316) dafür ausgelegt ist, beim Abstellen des Fahrzeugs in Reaktion darauf vermittels der Aktuator-Anordnung (236; 414) wenigstens einen der ersten Getriebeeingangswelle zugeordneten Getriebegang und wenigstens einen der zweiten Getriebeeingangswelle zugeordneten Getriebegang automatisch einzulegen, wobei zu den eingelegten Gängen ein niedriger oder mittlerer Vorwärtsgang und der Rückwärtsgang gehört.

4. Kraftfahrzeug nach Anspruch 3, **dadurch gekennzeichnet, dass** die Steuereinrichtung (316) dafür ausgelegt ist, beim Abstellen des Fahrzeugs in Reaktion darauf vermittels der Aktuator-Anordnung (236; 414) genau einen der ersten Getriebeeingangswelle zugeordneten Getriebegang und genau einen der zweiten Getriebeeingangswelle zugeordneten Getriebegang automatisch einzulegen, von denen einer der niedrige oder mittlere Vorwärtsgang und der andere der Rückwärtsgang ist.

5. Kraftfahrzeug nach Anspruch 3 oder 4, **dadurch gekennzeichnet, dass** als niedriger oder mittlerer Vorwärtsgang der erste oder zweite Gang eingelegt wird.

6. Kraftfahrzeug nach einem der Ansprüche 1 bis 5, **dadurch gekennzeichnet, dass** die Steuereinrichtung (316) dafür ausgelegt ist, den wenigstens einen beim Abstellen des Fahrzeugs vermittels der Aktuator-Anordnung (236; 414) eingelegten Getriebegang beim Eintreten einer Auslege-Bedingung automatisch wieder auszulegen.

7. Kraftfahrzeug nach einem der vorhergehenden Ansprüche, **dadurch gekennzeichnet, dass** ein Anlasser (456), der der als Brennkraftmaschine ausgeführten Antriebseinheit (238) zugeordnete ist, bzw. die Elektromaschine (456) zumindest kurzzeitig ein Drehmoment erzeugen kann, das ausreicht, Losbrechmomente und Schleppmomente der Kupplungsanordnungen (204, 206) aufgrund erhöhter Viskosität der Betriebsflüssigkeit bei tiefen Temperaturen sowie Gegenmomente der Antriebseinheit (238) zu überwinden, um die Antriebseinheit starten zu können oder/und ein Weiterdrehen der Welle zu ermöglichen.

8. Kraftfahrzeug, nach einem der vorhergehenden Ansprüche,**dadurch gekennzeichnet, dass** ein der einen Getriebeeingangswelle zugeordneter Vorwärtsgang und eine der anderen Getriebeeingangswelle zugeordneter Rückwärtsgang gleichzeitig einlegbar sind, und dass das Fahrzeug im Zustand, dass diese Gänge gleichzeitig eingelegt sind, fahrbar ist, wobei zum Fahren in Vorwärtsrichtung die der einen Getriebeeingangswelle zugeordnete Kupplungsanordnung (204 bzw. 206) ausgehend von einem ausgerückten Zustand im Einrücksinne betätigbar ist und zum Fahren in Rückwärtsrichtung die der anderen Getriebeeingangswelle zugeordnete Kupplungsanordnung (206 bzw. 204) ausgehend von einem ausgerückten Zustand im Einrücksinne betätigbar ist.

9. Kraftfahrzeug nach Anspruch 8, **dadurch gekennzeichnet, dass** zum Wechsel der Fahrrichtung von der Vorwärtsrichtung zur Rückwärtsrichtung die der einen Getriebeeingangswelle zugeordnete Kupplungsanordnung (204 bzw. 206) im Ausrücksinne und die der anderen Getriebeeingangswelle zugeordnete Kupplungsanordnung (206 bzw. 204) im Einrücksinne bzw. von der Rückwärtsrichtung zur Vorwärtsrichtung die der anderen Getriebeeingangswelle zugeordnete Kupplungsanordnung (206 bzw. 204) im Ausrücksinne und die der einen Getriebeeingangswelle zugeordnete Kupplungsanordnung (204 bzw. 206) im Einrücksinne betätigbar ist.

10. Kraftfahrzeug nach Anspruche 8 oder 9, **dadurch gekennzeichnet, dass** eine Gangauslege-Funktionalität (316) vorgesehen ist, die beim Fahren mit gleichzeitig eingelegtem Vorwärts- und Rückwärtsgang in Vorwärtsrichtung den Rückwärtsgang dann auslegt, wenn die Fahrzeuggeschwindigkeit einen Schwellenwert übersteigt.

11. Verfahren zum Betrieb eines Kraftfahrzeugs nach einem der vorhergehenden Ansprüche derart, dass Probleme im Zusammenhang mit Schleppmomenten, die bei niedrigen Temperaturen in der als Lamellen-Kupplungseinrichtung ausgeführten Kupplungseinrichtung auftreten, beherrscht oder zumindest gemildert werden, wobei in ersten Situationen die Steuereinrichtung (316) beim Abstellen des Fahrzeugs in Reaktion darauf vermittels der Aktuator-Anordnung wenigstens einen Getriebegang dann automatisch einlegt, wenn eine momentane Außentemperatur unter einem Schwellenwert liegt, und wobei in zweiten Situationen beim Abstellen des Fahrzeugs kein gang eingelegt wird.

## Claims

1. Motor vehicle, comprising a drive train which has the following: a drive unit (238), a transmission (330) having a first transmission input shaft and a second transmission input shaft, and a clutch device (202) having a first clutch arrangement which is assigned to the first transmission input shaft and a second clutch arrangement which is assigned to the second transmission input shaft, for the transmission of moments between the drive unit and the transmission, the clutch arrangements being configured as multiple disc clutch arrangements (204, 206), to which an operating fluid, in particular a cooling oil, can be fed for operation under the action of the operating fluid, the transmission being assigned an actuator arrangement (236; 414) and a control device (316) which actuates the actuator arrangement and via which transmission gears which are assigned to the first and the second transmission input shafts can be engaged and disengaged, **characterized in that** the control device (316) is configured in first situations for automatically engaging at least one transmission gear via the actuator arrangement when the vehicle is parked in reaction to the latter when the current outside temperature lies below a threshold value, and **in that** no gear is engaged in second situations when the vehicle is parked.

2. Motor vehicle according to Claim 1, **characterized in that** a selector device (452) which can be operated manually is provided for selecting different vehicle and/or transmission modes, and **in that** the control device (316) engages the at least one transmission gear in reaction to the selection of a park mode (P).

3. Motor vehicle according to Claim 1 or 2, **characterized in that** the control device (316) is configured for automatically engaging at least one transmission gear which is assigned to the first transmission input shaft and at least one transmission gear which is assigned to the second transmission input shaft via the actuator arrangement (236; 414) when the vehicle is parked in reaction to the latter, a low or medium forward gear and the reverse gear belonging to the engaged gears.

4. Motor vehicle according to Claim 3, **characterized in that** the control device (316) is configured for automatically engaging exactly one transmission gear which is assigned to the first transmission input shaft and exactly one transmission gear which is assigned to the second transmission input shaft via the actuator arrangement (236; 414) when the vehicle is parked in reaction to the latter, of which transmission gears one is the low or medium forward gear and the other is the reverse gear.

5. Motor vehicle according to Claim 3 or 4, **characterized in that** the first or second gear is engaged as low or medium forward gear.

6. Motor vehicle according to one of Claims 1 to 5, **characterized in that** the control device (316) is configured for automatically disengaging again the at least one transmission gear which is engaged via the actuator arrangement (236; 414) when the vehicle is parked, when a disengagement condition occurs.

7. Motor vehicle according to one of the preceding claims, **characterized in that** a starter (456) which is assigned to the drive unit (238) which is configured as an internal combustion engine or the electric machine (456) can generate a torque at least for a short time which is sufficient to overcome breakaway moments and drag moments of the clutch arrangements (204, 206) on account of increased viscosity of the operating fluid at low temperatures and countermoments of the drive unit (238), in order for it to be possible to start the drive unit and/or in order to make further rotation of the shaft possible.

8. Motor vehicle according to one of the preceding claims, **characterized in that** a forward gear which is assigned to one transmission input shaft and a reverse gear which is assigned to the other transmission input shaft can be engaged at the same time, and **in that** the vehicle can be driven in the state in which these gears are engaged at the same time, it being possible for the clutch arrangement (204 or 206) which is assigned to one transmission input shaft to be actuated in the engagement direction for driving in the forward direction, in a manner which proceeds from the disengaged state, and it being possible for the clutch arrangement (206 or 204) which is assigned to the other transmission input shaft to be actuated in the engagement direction for driving in the reverse direction, in a manner which proceeds from the disengaged state.

9. Motor vehicle according to Claim 8, **characterized in that**, in order to change the driving direction from the forward direction to the reverse direction, the clutch arrangement (204 or 206) which is assigned to one transmission input shaft can be actuated in the disengagement direction and the clutch arrangement (206 or 204) which is assigned to the other transmission input shaft can be actuated in the engagement direction, or, in order to change the driving direction from the reverse direction to the forward direction, the clutch arrangement (206 or 204) which is assigned to the other transmission input shaft can be actuated in the disengagement direction and the clutch arrangement (204 or 206) which is assigned to one transmission input shaft can be actuated in the engagement direction.

10. Motor vehicle according to Claim 8 or 9, **characterized in that** a gear disengagement functionality (316) is provided which, during driving with simultaneously engaged forward and reverse gears in the forward direction, disengages the reverse gear when the vehicle speed exceeds a threshold value.

11. Method for operating a motor vehicle according to one of the preceding claims in such a way that problems in conjunction with drag moments which occur at low temperatures in the clutch device which is configured as a multiple disc clutch device are controlled or at least lessened, the control device (316) in first situations automatically engaging at least one transmission gear via the actuator arrangement when the vehicle is parked in reaction to the latter when the current outside temperature lies below a threshold value, and no gear being engaged in second situations when the vehicle is parked.

## Revendications

1. Véhicule automobile, comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206), auxquels peut être apporté un liquide de service, notamment un liquide de refroidissement, pour un fonctionnement sous l'action du liquide de service,
sachant qu'un ensemble d'actionneur (236 ; 414) et un dispositif de commande (316) commandant l'ensemble d'actionneur, par l'intermédiaire desquels des rapports de boîte associés au premier et au deuxième arbres d'entrée de boîte peuvent être engagés et désengagés, sont associés à la boîte de vitesses,
**caractérisé en ce que**, dans des premières situations, le dispositif de commande (316) est conçu pour, en réaction au stationnement du véhicule, engager automatiquement au moyen de l'ensemble d'actionneur au moins un rapport de boîte si une température extérieure momentanée est inférieure à une valeur de seuil,
et **en ce que**, dans des deuxièmes situations, aucun rapport n'est engagé lors du stationnement du véhicule.

2. Véhicule automobile selon la revendication 1, **caractérisé en ce qu'**il est prévu un dispositif sélecteur (452) à actionnement manuel pour sélectionner différents modes de véhicule et/ou de boîte, et **en ce que** le dispositif de commande (316) engage le rapport de boîte au moins unique en réaction à la sélection d'un mode de parking (P).

3. Véhicule automobile selon la revendication 1 ou 2, **caractérisé en ce que** le dispositif de commande (316) est conçu pour, en réaction au stationnement du véhicule, engager automatiquement au moyen de l'ensemble d'actionneur (236 ; 414) au moins un rapport de boîte associé au premier arbre d'entrée de boîte et au moins un rapport de boîte associé au deuxième arbre d'entrée de boîte, sachant que les rapports engagés comprennent un rapport avant inférieur ou intermédiaire et le rapport arrière.

4. Véhicule automobile selon la revendication 3, **caractérisé en ce que** le dispositif de commande (316) est conçu pour, en réaction au stationnement du véhicule, engager automatiquement au moyen de l'ensemble d'actionneur (236 ; 414) exactement un rapport de boîte associé au premier arbre d'entrée de boîte et exactement un rapport de boîte associé au deuxième arbre d'entrée de boîte, l'un des rapports engagés étant le rapport avant inférieur ou intermédiaire et l'autre le rapport arrière.

5. Véhicule automobile selon la revendication 3 ou 4, **caractérisé en ce que** le premier ou le deuxième rapport est engagé comme rapport avant inférieur ou intermédiaire.

6. Véhicule automobile selon l'une quelconque des revendications 1 à 5, **caractérisé en ce que** le dispositif de commande (316) est conçu pour que le rapport de boîte au moins unique engagé au moyen de l'ensemble d'actionneur (236 ; 414) lors du stationnement du véhicule soit automatiquement désengagé à l'apparition d'une condition de désengagement.

7. Véhicule automobile selon l'une quelconque des revendications précédentes, **caractérisé en ce qu'**un démarreur (456), qui est associé à l'unité d'entraînement (238) réalisée sous forme de moteur à combustion interne, ou la machine électrique (456), peut produire au moins temporairement un couple de rotation qui suffit à vaincre les couples de décollement et les couples de glissement des ensembles d'embrayage (204, 206) consécutifs à la viscosité accrue du liquide de service à basses températures, ainsi que les couples antagonistes de l'unité d'entraînement (238), afin de pouvoir démarrer l'unité d'entraînement et/ou de permettre la poursuite de la rotation de l'arbre.

8. Véhicule automobile selon l'une quelconque des revendications précédentes, **caractérisé en ce qu'**un rapport avant associé à un premier arbre d'entrée de boîte et un rapport arrière associé à l'autre arbre d'entrée de boîte peuvent être simultanément engagés, et **en ce que** le véhicule peut rouler avec ces rapports simultanément engagés, sachant que pour rouler en marche avant, l'ensemble d'embrayage (204 ou 206) associé au premier arbre d'entrée de boîte peut être actionné dans le sens d'embrayage à partir d'un état débrayé, et que pour rouler en marche arrière, l'ensemble d'embrayage (206 ou 204) associé à l'autre arbre d'entrée de boîte peut être actionné dans le sens d'embrayage à partir d'un état débrayé.

9. Véhicule automobile selon la revendication 8, **caractérisé en ce que**, pour inverser le sens de marche de la marche avant à la marche arrière, l'ensemble d'embrayage (204 ou 206) associé au premier arbre d'entrée de boîte peut être actionné dans le sens de débrayage et l'ensemble d'embrayage (206 ou 204) associé à l'autre arbre d'entrée de boîte dans le sens d'embrayage, ou **en ce que**, pour inverser le sens de marche de la marche arrière à la marche avant, l'ensemble d'embrayage (206 ou 204) associé à l'autre arbre d'entrée de boîte peut être actionné dans le sens de débrayage et l'ensemble d'embrayage (204 ou 206) associé au premier arbre d'entrée de boîte dans le sens d'embrayage.

10. Véhicule automobile selon la revendication 8 ou 9, **caractérisé en ce qu'**il est prévu une fonctionnalité (316) de désengagement de rapport qui, lorsque le véhicule roule en marche avant avec le rapport avant et le rapport arrière simultanément engagés, désengage le rapport arrière si la vitesse du véhicule dépasse une valeur de seuil.

11. Procédé pour faire fonctionner un véhicule automobile selon l'une quelconque des revendications précédentes de manière à maîtriser ou du moins réduire les problèmes liés aux couples de glissement qui apparaissent à basses températures dans le dispositif d'embrayage réalisé sous forme de dispositif d'embrayage multidisques, sachant que, dans des premières situations, le dispositif de commande (316), en réaction au stationnement du véhicule, engage automatiquement au moyen de l'ensemble d'actionneur au moins un rapport de boîte si une température extérieure momentanée est inférieure à une valeur de seuil, et sachant que, dans des deuxièmes situations, aucun rapport n'est engagé lors du stationnement du véhicule.

# Fig.1

a)

214  216  202  206

204

230

210

232

208

211

209

212

222

b)

238  202  330

452

456

234  236

316

450

454

EP 1 350 044 B1

# Fig.2

ECU

34

Fig. 3

Fig. 4

Fig. 5a)

Fig. 5b)

A B C D E F G H C B A

Fig.6

Fig. 7

EP 1 350 044 B1

# Schaltablauf: Zug-Rück-Schaltung

Fig. 8